# EUROPEAN PATENT APPLICATION

(11) **EP 4 772 973 A1**
(43) Date of publication of application: **08.07.2026**
(21) Application number: 25801491.9
(22) Date of filing: 28.10.2025
(51) Int. Cl.: G06F 3/02, H04M 1/23, G01L 5/00, G06F 3/01

(54) **ELECTRONIC DEVICE COMPRISING SIDE KEY**

(30) Priority: 28.10.2024 KR 20240148509; 08.01.2025 KR 20250003078
(71) Applicant: Samsung Electronics Co., Ltd, Suwon-si, Gyeonggi-do 16677 (KR)
(72) Inventor: BYUN, Wanju, Suwon-si, Gyeonggi-do 16677 (KR); CHO, Sujeong, Suwon-si, Gyeonggi-do 16677 (KR); KIM, Moonyung, Suwon-si, Gyeonggi-do 16677 (KR); KIM, Woosub, Suwon-si, Gyeonggi-do 16677 (KR); PARK, Sejin, Suwon-si, Gyeonggi-do 16677 (KR); LEE, Dongmin, Suwon-si, Gyeonggi-do 16677 (KR); LEE, Heetak, Suwon-si, Gyeonggi-do 16677 (KR); LEE, Soyoung, Suwon-si, Gyeonggi-do 16677 (KR)
(74) Representative: HGF
(86) International application number: PCT/KR2025/017362
(87) International publication number: WO 2026/095587

(57) **Abstract**

An electronic device according to various embodiments of the disclosure may include a first housing, a second housing configured to move with respect to the first housing between a slide-in state and a slide-out state, a side key disposed on a side wall of the second housing and configured to press a side wall of the first housing when pressed, a first pressure sensor disposed in a first area of the first housing, and a second pressure sensor disposed in a second area of the first housing. The position of the side key may correspond to the first area of the first housing in the slide-in state and correspond to the second area of the first housing in the slide-out state. The first housing may be configured in a manner that the amount of deformation of the first area when the side key is pressed in the slide-in state and the amount of deformation of the second area when the side key is pressed in the slide-out state are substantially the same. Many other embodiments may be possible.

## Description

### [Technical Field]

Various embodiments of the disclosure relate to a key input device and, more particularly, to an electronic device including a side key.

### [Background Art]

Electronic devices are becoming increasingly slimmer, and are being developed to enhance the design aspect while differentiating their functional elements. Electronic devices are gradually evolving from uniform rectangular shapes to various shapes. Such an electronic device may have a changeable structure so that the device is convenient to carry and is also capable of utilizing a large-screen display. For example, the electronic device may have a structure (e.g., slidable structure) that allows the display area of a flexible display (e.g., a size of the display area visible from the front of the electronic device) to be varied through supporting housings of the electronic device that are slid in and slid out relative to one another.

The electronic device (e.g. a slidable device) may include various means for receiving input from the user. For example, the electronic device may include a touchscreen. Additionally, for convenience, the electronic device may include a key switch assigned a function to execute operations e.g. operations related to power, screen on/off, volume control, and/or camera shutter. To secure the display area of the electronic device, this key switch may have the form of a side key.

### [Disclosure of Invention]

### [Technical Problem]

When the electronic device is structurally changed by a sliding operation (e.g. between a slide in and a slide out state), the position of the side key disposed on the housing may be moved due to the displacement of the housing. Depending on the changing position of the side key, the user experience when using the side key may change and user convenience may decrease. For example, as the sliding operation may change a structure of the electronic device (and therefore change a position of the housing(s)) between the slide in and the slide out states, it may be difficult for the user conveniently and easily access the side key.

Various embodiments of the disclosure may provide an electronic device capable of improving the usability of the side key while allowing the structure of the housings to change.

### [Solution to Problem]

An electronic device according to various embodiments of the disclosure may include a first housing, and a second housing configured to move with respect to the first housing between a slide-in state and a slide-out state. The electronic device may include a side key disposed on a side wall of the second housing and configured to press a side wall of the first housing when pressed. The electronic device may include a first pressure sensor disposed in a first area of the first housing. The electronic device may include a second pressure sensor disposed in a second area of the first housing. The position of the side key may correspond to the first area of the first housing in the slide-in state and correspond to the second area of the first housing in the slide-out state. The first housing may be configured in a manner that the amount of deformation of the first area when the side key is pressed in the slide-in state and the amount of deformation of the second area when the side key is pressed in the slide-out state are substantially the same.

An electronic device according to various embodiments of the disclosure may include a first housing, and a second housing configured to move with respect to the first housing between a slide-in state and a slide-out state. The electronic device may include a side key disposed on a side wall of the second housing and configured to press a side wall of the first housing when pressed. The electronic device may include a first pressure sensor disposed in a first area of the first housing, and a second pressure sensor disposed in a second area of the first housing. The electronic device may include a non-transitory memory storing computer-executable instructions, and a processor operably connected to the first pressure sensor, the second pressure sensor, and the non-transitory memory. The computer-executable instructions may, when executed by the processor, cause the electronic device to perform a first operation upon determining that a detection value of the first pressure sensor is greater than or equal to a first threshold value, and to perform the first operation upon determining that a detection value of the second pressure sensor is greater than or equal to a second threshold value. The position of the side key may correspond to the first area of the first housing in the slide-in state and correspond to the second area of the first housing in the slide-out state. The first threshold value may be smaller than the second threshold value.

### [Advantageous Effects of Invention]

According to various embodiments of the disclosure, since the side key operates the first pressure sensor disposed in the first area of the first housing when the first housing is slid in relative to the second housing, and the side key operates the second pressure sensor disposed in the second area of the first housing when the first housing is slid out from the second housing, the key switch may be disposed at a fixed position of the second housing, and thus the user may manipulate the side key at the same position regardless of the slide-in and slide-out states of the first housing.

In addition, various effects may be provided that are directly or indirectly identified through this document.

### [Brief Description of Drawings]

In connection with the description of the drawings, the same or similar reference symbols may be used for identical or similar components.
FIG. 1 is a block diagram of an electronic device in a network environment according to various embodiments of the disclosure.
FIGS. 2A and 2B are views illustrating the front and back of an electronic device in slide-in state according to various embodiments of the disclosure.
FIGS. 3A and 3B are views illustrating the front and back of the electronic device in slide-out state according to various embodiments of the disclosure.
FIG. 4 is an exploded perspective view of the electronic device according to various embodiments of the disclosure.
FIG. 5A is an exploded perspective view of an electronic device according to various embodiments.
FIG. 5B is a perspective view of a first housing according to various embodiments.
FIG. 5C is a cross-sectional view of the electronic device in slide-out state according to various embodiments.
FIG. 5D is a cross-sectional view of the electronic device in slide-in state according to various embodiments.
FIG. 6A is an enlarged cross-sectional view of the electronic device according to various embodiments.
FIG. 6B is an enlarged cross-sectional view of the electronic device according to various embodiments.
FIG. 6C is a front view of a side key according to various embodiments.
FIG. 6D is a side view of the side key according to various embodiments.
FIG. 6E is a rear view of the side key according to various embodiments.
FIG. 7A is a perspective view of the first housing of the electronic device according to various embodiments of the disclosure.
FIG. 7B is a view illustrating the distribution of the amount of deformation of a first area in the first housing according to various embodiments.
FIG. 7C is a view illustrating the distribution of the amount of deformation of a second area in the first housing according to various embodiments.
FIG. 7D is a front view of the first housing according to various embodiments.
FIG. 7E is a perspective view of the first housing according to various embodiments.
FIG. 8A is a block diagram of an electronic device according to various embodiments.
FIG. 8B is a flowchart illustrating operations of the electronic device according to various embodiments.
FIG. 8C is a flowchart illustrating operations of the electronic device according to various embodiments.
FIG. 8D is a flowchart illustrating operations of the electronic device according to various embodiments.
FIG. 9A is an internal floor plan of the electronic device according to various embodiments.
FIG. 9B is a schematic diagram illustrating sliding input operation of the electronic device according to various embodiments.
FIG. 9C is a graph illustrating the operation of pressure sensors during sliding input operation in various embodiments.

### [Mode for the Invention]

Hereinafter, various embodiments will be described in detail with reference to the accompanying drawings.

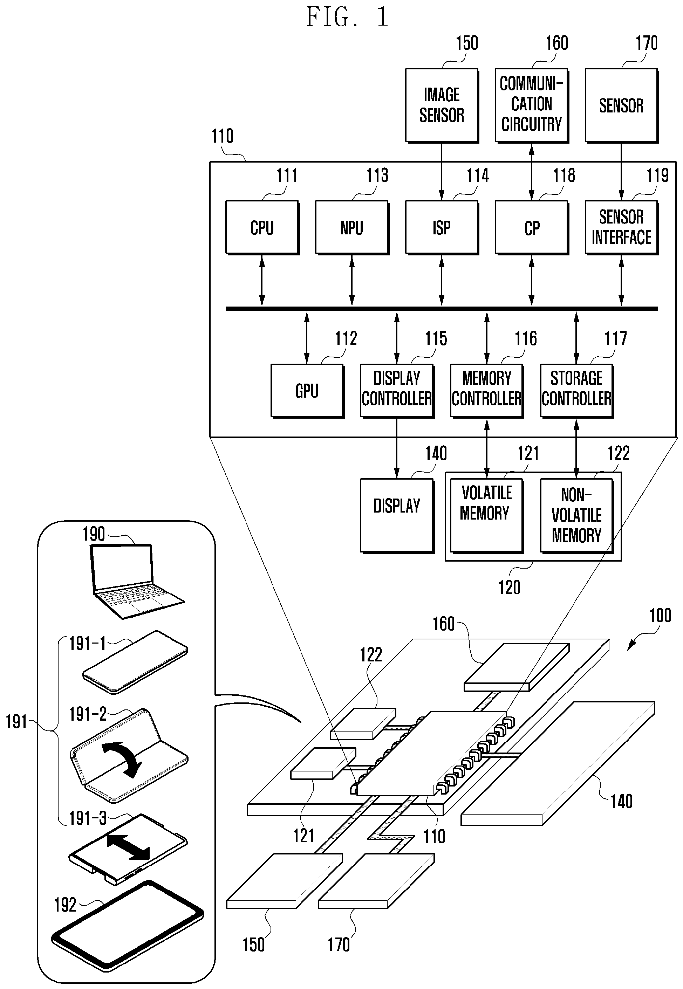

FIG. 1 is a block diagram of an exemplary electronic device 100 capable of performing the operations described in the present disclosure.

Referring to FIG. 1, the electronic device 100 may be one of various types of electronic devices, such as a laptop computer 190, smartphones 191 having various form factors (e.g., a bar-type smartphone 191-1, a foldable smartphone 191-2, or a slidable (or roller) smartphone 191-3), a tablet PC 192, a cellular phone (not shown), or other similar computing devices (not shown). The components shown in FIG. 1, the relationships thereof, and the functions thereof are merely of an example and are not intended to limit the implementations described or claimed in the present disclosure thereto. The electronic device 100 may be referred to as a mobile device, a user device, a multifunctional device, a portable device, or a server.

The electronic device 100 may comprise components including a processor 110, a memory 120 (e.g., a volatile memory 121 and/or a non-volatile memory 122), a display 140, an image sensor 150, a communication circuit 160, and/or a sensor 170. These components are only of an example. For example, the electronic device 100 may comprise other components (e.g., a power management integrated circuit (PMIC), an audio processing circuit, an antenna, a rechargeable battery, or an input/output interface). For example, some components may be omitted from the electronic device 100. For example, some components may be integrated into a single component.

The processor 110 may be implemented with one or more integrated circuit (IC) chips and may execute various data processes. The processor 110 may include at least one electrical circuit and may distribute instructions (or programs, data) stored in the memory 120 individually or collectively. The processor 110 may include an assembly of processors including one or more processing circuits. The processor 110 may include an operative processing circuit to control the performance and operations of one or more components (e.g., the memory 120, the display 140, the image sensor 150, the communication circuit 160, and/or the sensor 170).For example, the processor 110 (e.g., an application processor (AP)) may be implemented as a system on chip (SoC) (e.g., one chip or chipset). For example, processor 110 may be implemented with multiple cores (or at least one core circuit), multiple chips, or multiple chipsets. For example, processor 110 may include one or more processing circuits. For example, processor 110 may include one or more processing circuits configured to collectively perform the various functions of the present disclosure individually and/or collectively. As an example, but is not limited to, at least a portion of processor 110 may be included in the first chip of electronic device 100, and at least another portion of processor 110 may be included in the second chip of electronic device 100 different from the first chip of electronic device 100.

For example, the processor 110 may comprise, as sub-components, a central processing unit (CPU) 111, a graphics processing unit GPU 112, a neural processing unit (NPU) 113, an image signal processor (ISP) 114, a display controller 115, a memory controller 116, a storage controller 117, a communication processor (CP) 118, and/or a sensor interface 119. These sub-components are merely of an example. For example, the processor 110 may further comprise other sub-components. For example, some sub-components may be omitted from the processor 110. For example, some sub-components may be included as separate components of the electronic device 100 outside the processor 110. For example, some sub-components may be included in other components (e.g., the display 140 and/or the image sensor 150).

The processor 110 (e.g., the CPU 111 or a central processing circuit) may be configured to control the sub-components, based on execution of instructions stored in the memory 120 (e.g., the volatile memory 121 and/or the non-volatile memory 122). The GPU 112 (or a graphics processing circuit) may be configured to execute parallel operations (e.g., rendering). The NPU 113 (or a neural processing circuit) may be configured to execute operations (e.g., convolution computation) for an artificial intelligence model. The ISP 114 (or an image signal processing circuit) may be configured to process a raw image obtained through the image sensor 150 into a suitable format for the components in the electronic device 100 or the sub-components in the processor 110. The display controller 115 (or a display control circuit) may be configured to process an image obtained from the CPU 111, the GPU 112, the ISP 114, or the memory 120 (e.g., the volatile memory 121) into a suitable format for the display 140. The memory controller 116 (or a memory control circuit) may be configured to control reading data from the volatile memory 121 and recording data in the volatile memory 121. The storage controller 117 (or a storage control circuit) may be configured to control reading data from the non-volatile memory 122 and recording data in the non-volatile memory 122. The CP 118 (or a communication processing circuit) may be configured to process data obtained from the sub-component in the processor 110 into a suitable format for transmitting the data to another electronic device through the communication circuit 160, or to process data obtained through the communication circuit 160 from another electronic device into a suitable format for processing in the sub-component. The sensor interface 119 (or a sensing data processing circuit, a sensor hub) may be configured to process data about the state of the electronic device 100 and/or the state around the electronic device 100, obtained through the sensor 170, into a suitable format for sub-components in the processor 110.

Memory 120 may include one or more storage media (or one or more storage devices). For example, memory 120 may include a memory assembly including one or more storage media. For example, the above one or more storage media may include permanent memory (e.g., nonvolatile memory 122) such as hard drive, flash memory, read-only memory (ROM), semi-permanent memory (e.g., volatile memory 121), storage of any other suitable type (or storage assembly), or any combination thereof. The memory 120 may include a cache memory, which is a memory of one or more different types used to temporarily store data for a function or feature of the electronic device 100. For example, without limitation, the cache memory may be included in the processor 110. The memory 120 may be embedded fixedly in the electronic device 100 or may be integrated into one or more suitable types of components that may be inserted into the electronic device 100 repeatedly and removed from the electronic device 100.

For example, memory 120 may store one or more software applications, such as operating system (or system) software applications, firmware software applications, driver software applications, plug-in (e.g., add-in, add-on, and/or applet), and/or any other (suitable) software applications. For example, the above one or more software applications may include instructions executable by processor 110. For example, memory 120 may store instructions that can be called by an application programming interface (API). For example, memory 120 may store instructions within a library.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit .

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In the following description, the orthogonal coordinate system (x-y-z coordinate system) in the drawing may be referenced to explain various directions. The directions on the orthogonal coordinate system in the drawing referenced in the following description are exemplary, and it should be understood that descriptions such as 'first direction' and 'second direction' in the embodiments of the disclosure may include not only specific directions on the drawing but also other directions. Additionally, in the following description a term such as 'x-axis direction' may include both directions of the corresponding coordinate axis, for example, the +x direction and the -x direction.

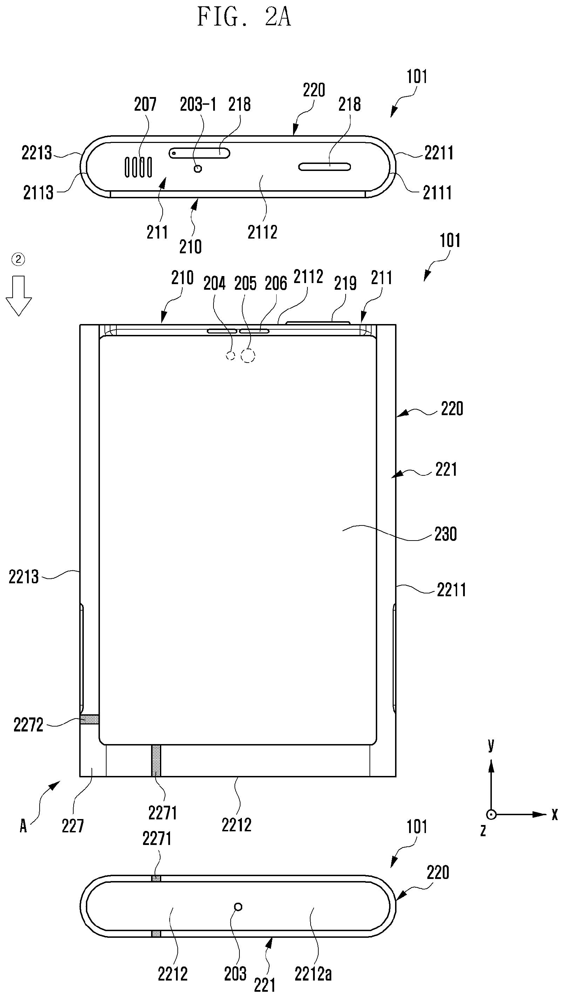

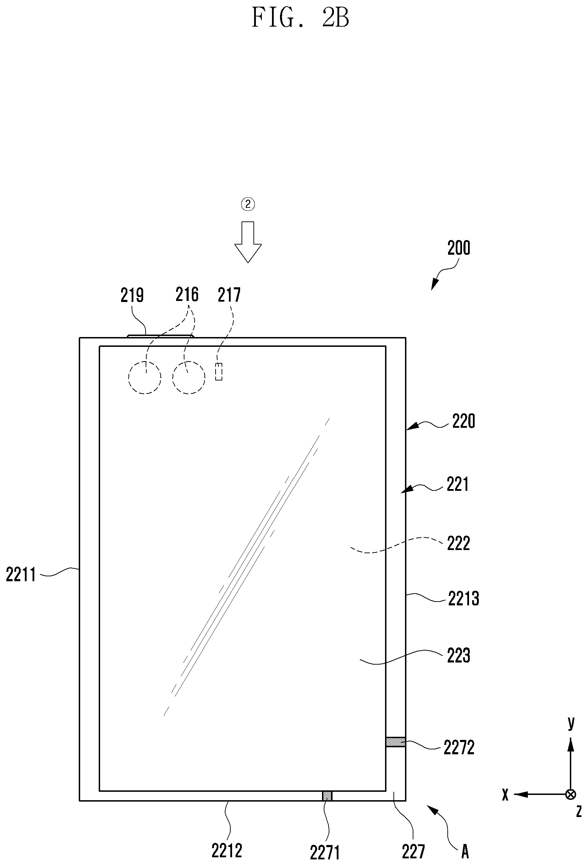

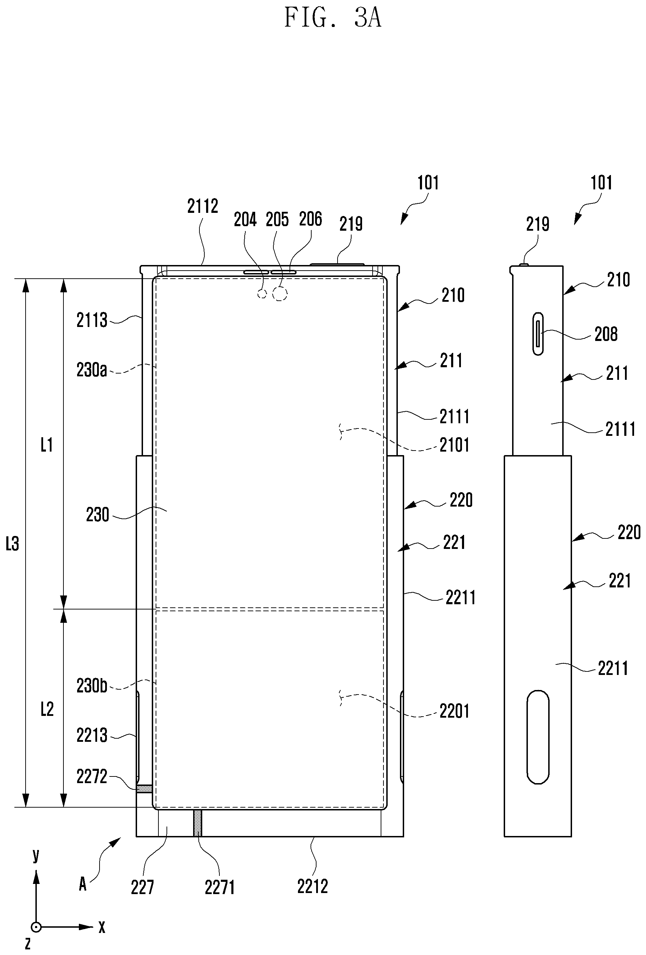

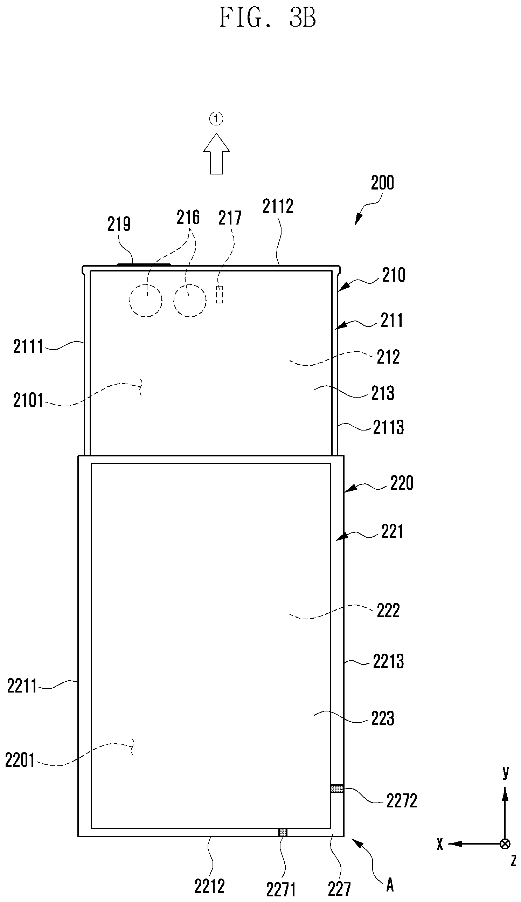

FIGS. 2A and 2B are views illustrating the front and back of an electronic device in slide-in state according to various embodiments of the disclosure. FIGS. 3A and 3B are views illustrating the front and back of the electronic device in slide-out state according to various embodiments of the disclosure.

The electronic device 200 of FIGS. 2A to 3B may be at least partially similar to the electronic device 100 of FIG. 1, or may further include other embodiments of the electronic device 100.

With reference to FIGS. 2A to 3B, the electronic device 200 may include a first housing 210 (e.g. first housing structure and/or slide housing), a second housing 220 (e.g., second housing structure and/or base housing) slidably coupled with the first housing 210 in a specified direction (e.g., direction ① or direction ②) (e.g., y-axis direction), and a flexible display 230 (e.g., expandable display, or stretchable display) disposed to be supported by at least a portion of the first housing 210 and the second housing 220. According to an embodiment, the first housing may be slidably coupled to the second housing, so that the first housing may be moved (e.g. slid, extended) depending on the motor and rack structure. Alternatively, the first housing and the second housing may be slidably coupled to each other. For example, the first housing may be slid relative to the second housing, and the second housing may be slid relative to the first housing.

According to embodiments, in the electronic device 200, with respect to the second housing 220 gripped by the user, the first housing 210 may be arranged to move (e.g., slide-out) in a first direction (direction ①, e.g. a +y direction) or to move (e.g., slide-in) in a second direction (direction ②, e.g. a -y direction) opposite to the first direction (direction ①). According to other embodiments, in the electronic device 200, with respect to the first housing 210 gripped by the user, the second housing 220 may be arranged to move (slide-out) in a first direction (direction ①) or to move (slide-in) in a second direction (direction ②) opposite to the first direction (direction ①). According to some embodiments, the electronic device 200 may be changed (e.g. may be configured, or arranged to, to change) into the slide-in state when at least a portion of the first housing 210 including a first space 2101 is accommodated in a second space 2201 of the second housing 220. The slide-in state may also be referred to as a retracted state or a reduced state. The slide-out state may also be referred to as an expanded or extended state. In addition, the slide-in state may be referred to as a first state in which the distance between the center of the first housing and the center of the second housing is substantially the closest, and the slide-out state may be referred to as a second state in which the distance between the center of the first housing and the center of the second housing is substantially the farthest. The slide-in state may be said to be a case where the display area of the display shown on the front of the electronic device is the smallest, and the slide-out state may be said to be a case where the display area of the display shown on the front of the electronic device is the largest.

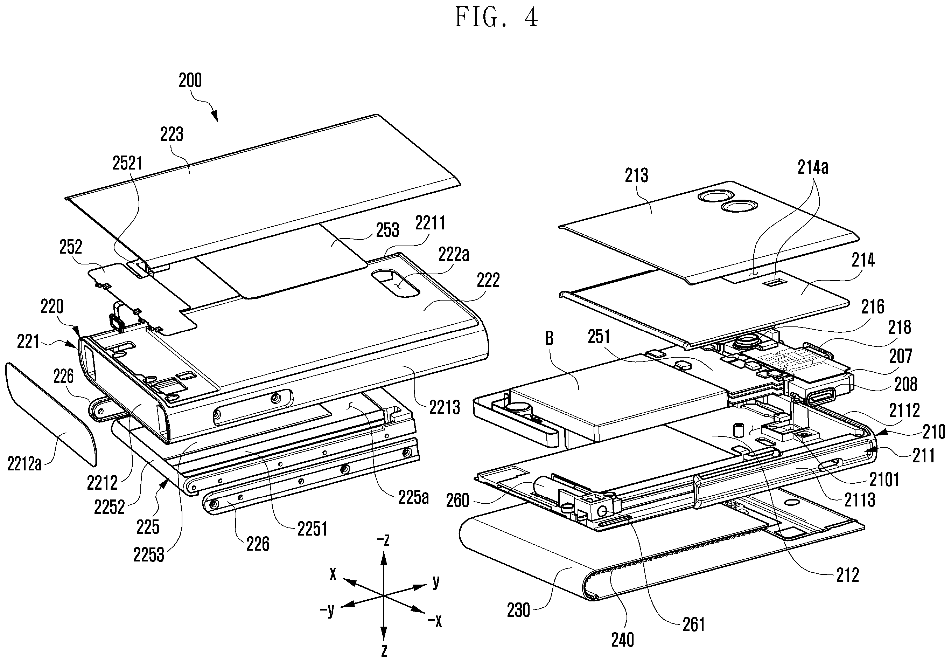

According to some embodiments, the electronic device 200 may include a bendable member (or, bendable support member) (e.g., bendable member 240 in FIG. 4) (e.g., multi-joint hinge module or multi-bar assembly) that forms at least partially the same plane as at least a portion of the first housing 210 in the slide-out state and is at least partially accommodated in the second space 2201 of the second housing 220 in the slide-in state. According to one embodiment, at least a portion of the flexible display 230 may be arranged to be invisible from the outside by being accommodated in the internal space (or inner space) 2201 of the second housing 220 while being supported by the bendable member (e.g., bendable member 240 in FIG. 4) in the slide-in state. According to some embodiments, at least a portion of the flexible display 230 may be arranged to be visible from the outside while being supported by the bendable member (e.g., bendable member 240 in FIG. 4) that forms at least partially the same plane as the first housing 210 in the slide-out state.

According to various embodiments, the electronic device 200 may include the first housing 210 including a first lateral member 211, and the second housing 220 including a second lateral member 221. According to an embodiment, the first lateral member 211 may include a first side surface 2111 having a first length along the first direction (e.g., y-axis direction), a second side surface 2112 (e.g. a top side surface, or top surface) extended from the first side surface 2111 along a direction substantially perpendicular to the first side surface 2111 (e.g., x-axis direction) to have a second length shorter than the first length, and a third side surface 2113 extended from the second side surface 2112 substantially parallel to the first side surface 2111 to have the first length. According to an embodiment, the first lateral member 211 may be made at least partially of a conductive material (e.g., metal). In a certain embodiment, the first lateral member 211 may be made of a combination of a conductive material and a non-conductive material (e.g., polymer). According to an embodiment, the first housing 210 may include a first support member 212 extended from at least a portion of the first lateral member 211 to at least a portion of the first space 2101. According to an embodiment, the first support member 212 may be formed integrally with the first lateral member 211. In a certain embodiment, the first support member 212 may be formed separately from the first lateral member 211, and may be structurally coupled to the first lateral member 211.

According to various embodiments, the second lateral member 221 may include a fourth side surface 2211 that corresponds at least partially to the first side surface 2111 and has a third length, a fifth side surface 2212 (e.g. a bottom side surface, bottom surface) that extends from the fourth side surface 2211 in a direction substantially parallel to the second side surface 2112 and has a fourth length shorter than the third length, and a sixth side surface 2213 that extends from the fifth side surface 2212 in correspondence to the third side surface 2113 and has the third length. According to an embodiment, the second lateral member 221 may be made at least partially of a conductive material (e.g., metal). In a certain embodiment, the second lateral member 221 may be made of a combination of a conductive material and a non-conductive material (e.g., polymer). According to an embodiment, at least a portion of the second lateral member 221 may include a second support member 222 that extends to at least a portion of the second space 2201 of the second housing 220. According to an embodiment, the second support member 222 may be formed integrally with the second lateral member 221. In a certain embodiment, the second support member 222 may be formed separately from the second lateral member 221 and may be structurally coupled to the second lateral member 221.

According to various embodiments, the first side surface 2111 and the fourth side surface 2211 may be slidably coupled to each other. According to an embodiment, the third surface 2113 and the sixth side surface 2213 may be slidably coupled to each other. According to an embodiment, in the slide-in state, the first side surface 2111 may be arranged to be substantially invisible from the outside by overlapping with the fourth side surface 2211. According to an embodiment, in the slide-in state, the third surface 2113 may be arranged to be substantially invisible from the outside by overlapping with the sixth side surface 2213. In a certain embodiment, at least a portion of the first side surface 2111 and the third surface 2113 may be arranged to be at least partially visible from the outside in the slide-in state. According to an embodiment, in the slide-in state, the first support member 212 may be arranged substantially invisible from the outside by overlapping with the second support member 222. In a certain embodiment, in the slide-in state, a portion of the first support member 212 may be disposed to be invisible from the outside by overlapping with the second support member 222, and the remaining portion of the first support member 212 may be disposed to be visible from the outside.

According to various embodiments, the electronic device 200 may include a first rear cover 213 coupled with the first housing 210 at the back. According to an embodiment, the first rear cover 213 may be disposed through at least a portion of the first support member 212. In a certain embodiment, the first rear cover 213 may be formed integrally with the first lateral member 211. According to an embodiment, the first rear cover 213 may be made of polymer, coated or colored glass, ceramic, metal (e.g., aluminum, stainless steel (STS), or magnesium), or a combination of at least two thereof. In a certain embodiment, the first rear cover 213 may extend to at least a portion of the first lateral member 211. In a certain embodiment, at least a portion of the first support member 212 may be replaced with the first rear cover 213.

According to various embodiments, the electronic device 200 may include a second rear cover 223 coupled with the second housing 220 at the back. According to an embodiment, the second rear cover 223 may be disposed through at least a portion of the second support member 222. In a certain embodiment, the second rear cover 223 may be formed integrally with the second lateral member 221. According to an embodiment, the second rear cover 223 may be made of polymer, coated or colored glass, ceramic, metal (e.g., aluminum, stainless steel (STS), or magnesium), or a combination of at least two thereof. In a certain embodiment, the second rear cover 223 may extend to at least a portion of the second lateral member 221. In a certain embodiment, at least a portion of the second support member 222 may be replaced with the second rear cover 223.

According to various embodiments, the electronic device 200 may include a flexible display 230 disposed to be supported by at least a portion of the first housing 210 and the second housing 220. According to an embodiment, the flexible display 230 may include a first part 230a (e.g., flat part) that is always visible from the outside, and a second part 230b (e.g., bendable part) that extends from the first part 230a and is at least partially accommodated in the second space 2201 of the second housing 220 in the slide-in state so that at least a portion thereof is not visible from the outside. According to an embodiment, the first part 230a may be disposed to be supported by the first housing 210, and the second part 230b may be disposed to be supported at least partially by a bendable member (e.g., bendable member 240 in FIG. 4). According to an embodiment, in a state where the first housing 210 is slid out along the first direction (direction ①), the second part 230b of the flexible display 230 may be arranged to be extended from the first part 230a while being supported by the bendable member (e.g., bendable member 240 in FIG. 4), to form substantially the same plane as the first part 230a, and to be visible from the outside. According to an embodiment, in a state (slide-in state) where the second housing 220 is slid in along the second direction (direction ②), the second part 230b of the flexible display 230 may be arranged to be accommodated in the second space 2201 of the second housing 220, and not to be visible from the outside. Hence, the electronic device 200 may induce the display area of the flexible display 230 to vary as the first housing 210 is slidably moved along a specified direction (e.g., y-axis direction) with respect to the second housing 220.

According to various embodiments, the flexible display 230 may have a length variable in the first direction (direction ①) according to the sliding movement of the first housing 210 relative to the second housing 220. For example, in the slide-in state, the flexible display 230 may have a first display area corresponding to the first length L1 (e.g., area corresponding to the first part 230a). According to an embodiment, in the slide-out state, the flexible display 230 may be expanded to have a third display area (e.g., area including the first part 230a and the second portion 230b) that corresponds to the third length L3 longer than the first length L1 and is larger than the first display area, according to the sliding movement of the first housing 210 that is additionally moved by the second length L2 relative to the second housing 220.

According to various embodiments, the electronic device 200 may include at least one among an input device (e.g., microphone 203-1), a sound output device (e.g., call receiver 206 or speaker 207), sensor modules 204 and 217, camera modules (e.g., first camera module 205 or second camera module 216), a connector port 208, a key input device 219, a side key input device 2191, and an indicator (not shown), which are arranged in the first space 2101 of the first housing 210. According to an embodiment, the electronic device 200 may include another input device (e.g., microphone 203) arranged in the second housing. As another embodiment, the electronic device 200 may be configured such that at least one of the above-described components is omitted or other components are additionally included. As another embodiment, at least one of the above-described components may be arranged in the second space 2201 of the second housing 220.

According to various embodiments, the input device may include a microphone 203-1. In a certain embodiment, the input device (e.g., microphone 203-1) may include multiple microphones arranged to detect the direction of sound. The sound output device may include, for example, a call receiver 206 and a speaker 207. According to an embodiment, the speaker 207 may respond to the outside through at least one speaker hole formed in the first housing 210 at a position (e.g., second side surface 2112) that is always exposed to the outside regardless of the slide-in/slide-out state. According to an embodiment, the connector port 208 may respond to the outside in the slide-out state through a connector port hole formed in the first housing 210. In a certain embodiment, the connector port 208 may respond to the outside in the slide-in state through an opening formed in the second housing in correspondence to the connector port hole. In a certain embodiment, the call receiver 206 may include a speaker (e.g., piezo speaker) operable without a separate speaker hole.

According to various embodiments, the sensor modules 204 and 217 may generate an electric signal or data value corresponding to an internal operating state of the electronic device 200 or an external environmental state. The sensor modules 204 and 217 may include, for example, a first sensor module 204 (e.g., proximity sensor or illuminance sensor) disposed on the front of the electronic device 200 and/or a second sensor module 217 (e.g., heart rate monitoring (HRM) sensor) disposed on the back of the electronic device 200. According to an embodiment, the first sensor module 204 may be disposed under the flexible display 230 in the front of the electronic device 200. According to an embodiment, the first sensor module 204 and/or the second sensor module 217 may include at least one of a proximity sensor, an illuminance sensor, a time of flight (TOF) sensor, an ultrasonic sensor, a fingerprint recognition sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, or a humidity sensor.

According to various embodiments, the camera modules may include a first camera module 205 disposed on the front of the electronic device 200 and a second camera module 216 disposed on the back of the electronic device 200. According to an embodiment, the electronic device 200 may include a flash (not shown) positioned near the second camera module 216. According to an embodiment, the camera modules 205 and 216 may include one or multiple lenses, an image sensor, and/or an image signal processor. According to an embodiment, the first camera module 205 may be disposed under the flexible display 230 and configured to photograph a subject through a portion of the active area (e.g., display area) of the flexible display 230.

According to various embodiments, the first camera module 205 among the camera modules and the sensor module 204 among the sensor modules 204 and 217 may be arranged to detect an external environment through the flexible display 230. For example, the first camera module 205 or the sensor module 204 may be arranged in the first space 2201 of the first housing 210 so as to come into contact with the external environment through a transmissive region or perforated opening formed in the flexible display 230. According to an embodiment, the region of the flexible display 230 facing the first camera module 205 may be formed as a transmissive region with a specified transmittance as a part of the display area that displays content. According to an embodiment, the transmissive region may be formed to have a transmittance ranging from about 5% to about 20%. This transmissive region may include a region overlapping with the effective area (e.g., field-of-view area) of the first camera module 205 through which light passes to create an image by being imaged by an image sensor. For example, the transmissive region of the flexible display 230 may include a region where the pixel arrangement density and/or wiring density are lower than surrounding regions. For example, the transmissive region may replace the opening described above. For example, the camera module 205 may include an under display camera (UDC). In a certain embodiment, the sensor module 204 may be arranged in the internal space of the electronic device 200 so as to perform its functions without being visually exposed through the flexible display 230.

According to various embodiments, the electronic device 200 may include at least one antenna (e.g., antenna 214b in FIG. 1) electrically connected to a wireless communication circuit (e.g., communication circuit 160 in FIG. 1) disposed in the second housing 210. According to an embodiment, the electronic device 200 may include a bezel antenna A disposed through the conductive second lateral member 221 of the second housing 210. For example, the bezel antenna A may include a conductive part 227 electrically isolated through one or more cut-off portions 2271 and 2272 made of a non-conductive material (e.g., polymer) and disposed on at least a portion of the fifth side surface 2212 and the sixth side surface 2213 of the second lateral member 221. According to an embodiment, the wireless communication circuit (e.g., communication circuit 160 in FIG. 1) may be configured to transmit or receive a radio signal in at least one frequency band (e.g., about 800 MHz to 6000 MHz) (e.g., legacy band) specified through the conductive part 227. According to an embodiment, the electronic device 200 may include a side cover 2212a disposed on the fifth side surface 2212 to at least partially cover the at least one cut-off portion 2271. In a certain embodiment, the bezel antenna A may be disposed on at least one side surface among the second side surface 2112, the fourth side surface 2211, the fifth side surface 2212, and the sixth side surface 2213. In a certain embodiment, the electronic device 200 may further include at least one antenna module (e.g., 5G antenna module or antenna structure) that is disposed in the internal space (e.g., first space 2101 or second space 2201) and configured to transmit or receive a radio signal in a frequency band ranging from about 3 GHz to 100 GHz via another wireless communication circuit (e.g., communication circuit 160 in FIG. 1).

According to various embodiments, the slide-in/slide-out operation of the electronic device 200 may be performed through driving of a drive module (e.g., drive motor) under specified conditions (e.g., specified movement direction and/or specified movement distance). For example, the slide-in/slide-out operation of the electronic device 200 may be performed through the gearing operation between a drive motor (e.g., drive motor 260 in FIG. 4) including a pinion gear 261 disposed in the first space 2101 of the first housing 210 and a rack gear (e.g., rack gear 2251 in FIG. 4) disposed in the second space 2201 of the second housing 220 and engaged with the pinion gear 261. For example, when detecting a triggering operation for switching from the slide-in state to the slide-out state or from the slide-out state to the slide-in state, the processor (e.g., processor 110 in FIG. 1) of the electronic device 200 may start the drive motor (e.g., drive motor 260 in FIG. 4) disposed inside the electronic device 200. According to an embodiment, the triggering operation may include selecting (e.g., touching) an object displayed on the flexible display 230 or manipulating a physical button (e.g., key button) included in the electronic device 200.

FIG. 4 is an exploded perspective view of the electronic device according to various embodiments of the disclosure.

In describing the electronic device 200 of FIG. 4, components that are substantially the same as those of the electronic device 200 of FIGS. 2A to 3B are given the same symbols, and a detailed description thereof may be omitted.

With reference to FIG. 4, the electronic device 200 may include a first housing 210 including a first space 2101 (e.g. the first housing comprising, or defining, an inner space therein), a second housing 220 slidably coupled to the first housing 210 and including a second space (e.g. the second housing comprising, or defining, an inner space, e.g., second space 2201 of FIG. 3A), a bendable member 240 at least partially rotatably arranged in the second space 2201, a flexible display 230 arranged to be supported by at least a portion of the bendable member 240 and the first housing 210, and a drive module that drives in a direction in which the first housing 210 is to be slid in to the second housing 220 (e.g., negative y-axis direction) and/or in a direction in which the first housing 210 is to be slid out from the second housing 220 (e.g., y-axis direction). According to an embodiment, the drive module may include a drive motor 260 disposed in the first space 2101 and including a pinion gear 261, and a rack gear 2251 disposed in the second space 2201 to be engaged with the pinion gear 261. According to an embodiment, the drive module may further include a deceleration module arranged to reduce the rotational speed and increase the driving force by being coupled with the drive motor 260. According to an embodiment, the drive motor 260 may be disposed to be supported through at least a portion of the first support member 212 in the first space 2101 of the first housing 210. According to an embodiment, the drive motor 260 may be fixed to the end portion (e.g., edge) of the first support member 212 in the slide-in direction (e.g., negative y-axis direction) in the first space 2101.

According to various embodiments, the electronic device 200 may include a plurality of electronic components arranged in the first space 2101. According to an embodiment, the plural (e.g. plurality of) electronic components may include a first board 251 (e.g., main board), a camera module 216, a socket module 218 (e.g., SIM tray), a speaker 207, a connector port 208, and a battery B, which are arranged around the first board 251. According to an embodiment, as the plural electronic components are arranged together with the drive motor 260 around the first board 251 in the first space 2101 of the first housing 210, it is possible to efficiently make electrical connections.

According to various embodiments, the electronic device 200 may include a rear bracket 214 arranged between the first support member 212 of the first housing 210 and the first rear cover 213 to cover at least some of the plural electronic components. According to an embodiment, the rear bracket 214 may be structurally coupled to at least a portion of the first support member 212. In a certain embodiment, the rear bracket 214 may be omitted. According to an embodiment, the rear bracket 214 may be arranged so as to cover a plurality of electronic components and support the first rear cover 213. According to an embodiment, the rear bracket 214 may include a notch region 214a or an opening 214a (e.g., through hole) formed in a region corresponding to the camera module 216 and/or the sensor module (e.g., sensor module 217 in FIG. 3B). According to an embodiment, the camera module 216 and/or the sensor module 217 may be arranged to sense the external environment through the notch region 214a or the opening 214a. According to an embodiment, the region of the first rear cover 213 corresponding at least to the camera module 216 and/or the sensor module 217 may be processed to be transparent. In a certain embodiment, the camera module 216 and/or the sensor module 217 may be configured to operate only when the electronic device 200 is in the slide-out state.

According to various embodiments, the electronic device 200 may include a plate-type support bracket 225 (e.g., display support bar (DSB)) that is disposed in the second space 2201 of the second housing 220 and slidably coupled with at least a portion of the first support member 212. According to an embodiment, the support bracket 225 may include an opening 225a of a specified size. According to an embodiment, the support bracket 225 may include a support part 2252 disposed at one end and having a curved outer surface formed to support the rear surface of the bendable member 240 that is bent during the sliding operation. According to an embodiment, the support bracket 225 may include a support plate 2253 that is formed to support the rear surface of the bendable member 240 in the slide-out state by being extended from at least a portion of the support part 2252 to at least a portion of the opening 225a. According to an embodiment, the support bracket 225 may include a rack gear 2251 that crosses the opening 225a and is fixed to have a length along a direction parallel to the sliding direction. In a certain embodiment, the rack gear 2251 may be formed integrally with the support bracket 225. According to an embodiment, the electronic device 200 may include a pair of guide rails 226 disposed on both sides of the support bracket 225 to guide both ends of the bendable member 240 in the sliding direction.

According to various embodiments, the second housing 220 may include, in the second support member 222, an opening 222a (e.g., through hole) disposed in a region corresponding to the camera module 216 and/or the sensor module 217 disposed in the first housing 210 when the electronic device 200 is in the slide-in state. According to an embodiment, when the electronic device 200 is in the slide-in state, the camera module 216 and/or the sensor module 217 may sense the external environment through the opening 222a formed in the second housing 220. In this case, the region of the second rear cover 223 corresponding at least to the camera module 216 and/or the sensor module 217 may be processed to be transparent.

According to various embodiments, the electronic device 200 may include a second board 252 and an antenna member 253 arranged in a space between the second support member 222 of the second housing 220 and the second rear cover 223. According to an embodiment, the second board 252 and the antenna member 253 may be electrically connected to the first board 251 through at least one electrical connection member (e.g., flexible printed circuit substrate (FPCB) or flexible RF cable (FRC)). In a certain embodiment, the antenna member 253 may be electrically connected to the first board 251 through the second board 252 by being electrically connected to the second board 252.

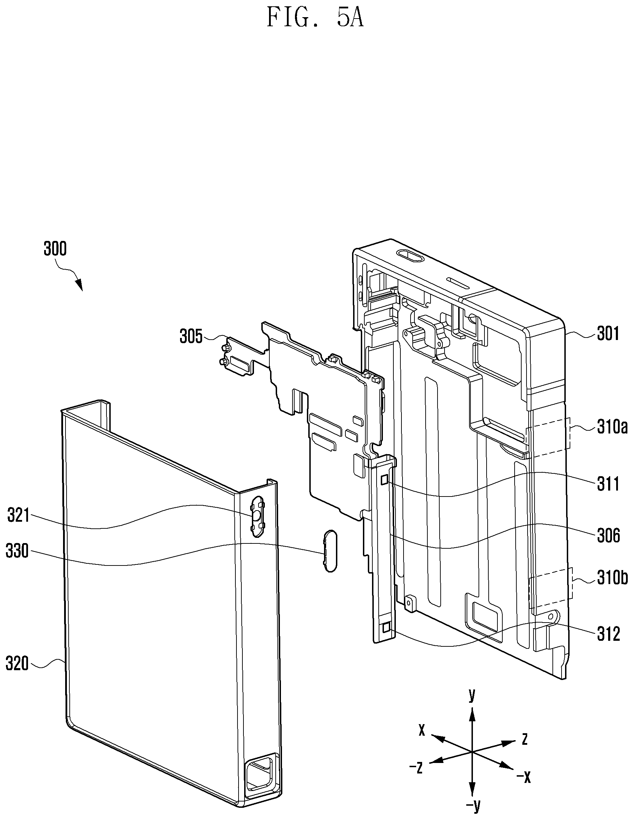

FIG. 5A is an exploded perspective view of an electronic device 300 according to various embodiments.

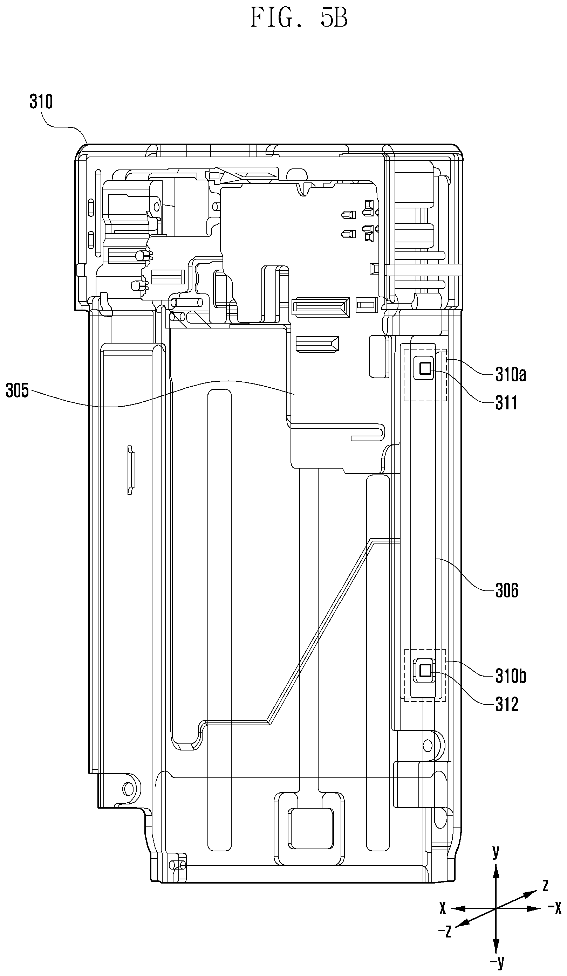

FIG. 5B is a perspective view of a first housing 310 according to various embodiments.

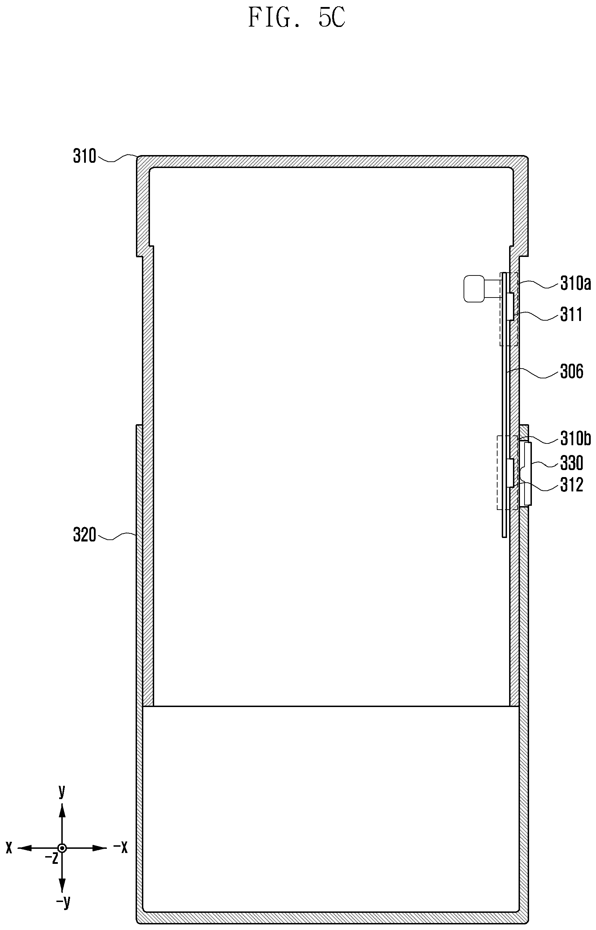

FIG. 5C is a cross-sectional view of the electronic device 300 in slide-out state according to various embodiments.

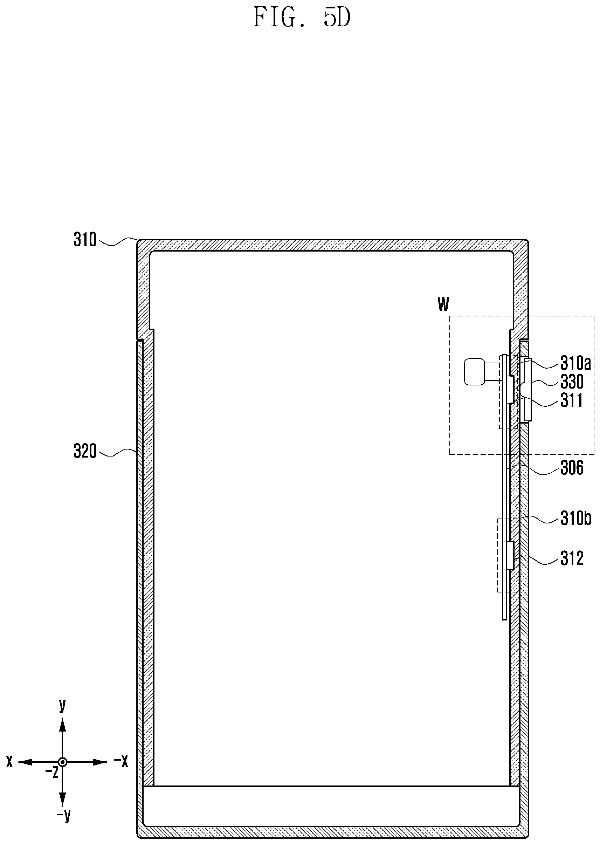

FIG. 5D is a cross-sectional view of the electronic device 300 in slide-in state according to various embodiments.

With reference to FIGS. 5A to 5D, the electronic device 300 according to various embodiments (e.g., electronic device 100 of FIG. 1, electronic device 200 of FIGS. 2A to 4) may include a first housing 310 (e.g., first housing 210 in FIGS. 2A to 4) and a second housing 320 (e.g., second housing 220 in FIGS. 2A to 4). The first housing 310 may be a housing that is equipped with (e.g. comprises, or defines) an internal space for accommodating internal components such as a circuit board 305 (e.g., first board 251 in FIG. 2A) of the electronic device 300. The second housing 320 may be configured to at least partially accommodate the first housing 310 so that the first housing 310 may slide in and slide out of the interior thereof.

In various embodiments, the electronic device 300 may include a side key 330 (e.g. a side button). The side key 330 may be disposed on the side surface (e.g. an external or outer side wall, external side surface, for example, a side surface 2211, a side surface 2213 of Figures 2-3B) of the second housing 320 and configured to be manipulated (e.g., pressed) by the user. For example, a user may provide an input (a press input) to manipulate the side key 330. When pressed, the side key 330 may press on a side wall (side surface) of the first housing 310 (e.g. a side surface 2111, 2113) in response to the press input. In various embodiments, when manipulated by the user, the side key 330 may cause a switch (e.g., first pressure sensor 311 and/or second pressure sensor 312 to be described below) to be triggered, thereby causing the electronic device 300 to perform a specific operation assigned to the side key 330. The operations performed by the electronic device 300 upon manipulating the side key 330 may include, for example, power on/off, display on/off, camera shooting, volume adjustment, and/or specific applications that may be configured by the user (as a non-limiting example, artificial intelligence assistant, recording, screen capture, and/or payment).

In various embodiments, the electronic device 300 may include a first pressure sensor 311 and a second pressure sensor 312. The first pressure sensor 311 and the second pressure sensor 312 may be arranged in the first housing 310. The first pressure sensor 311 may be disposed in the first area 310a , which is the position of the first housing 310 corresponding to the side key 330 in the slide-in state (the first housing 310 may be slid in to the second housing 320). The second pressure sensor 312 may be disposed in the second area 310b, which is the position of the first housing 310 corresponding to the side key 330 in the slide-out state (the first housing 310 may be slid out from the second housing 320).

In other words, the side key 330 may be positioned on an external side surface (side wall) of the second housing 220. However, as the second housing 330 is configured to move with respect to the first housing 310 (or, alternatively, the first housing 310 is configured to move with respect to the second housing 320) between the slide in and slide out states, an area of the first housing 310 (a first area 310a and second area 310b) which corresponds to (e.g. is adjacent to) the position of the side key 330 is different between these slide in and slide out states. In the slide out state, the first housing 310 is slid out from (extended from) being accommodated within the second housing 320. Therefore, an area of the first housing 310 which corresponds to (is adjacent to) the position of the side key 330 is a second area 310b. In the slide in state, where the first housing is slid in (accommodated within) the second housing 320, an area of the first housing 310 which corresponds to the position of the side key 330 is a first area 310a. The first area 310a therefore corresponds to an area of the side surface (e.g. a side surface 2111) which is higher (e.g. closer to the top side surface, e.g. top surface 2112) of the first housing 310 than the second area 310b. The second area 310b of the first housing 310 therefore corresponds to an area of the side surface of the first housing 310 which is positioned further from a top side surface than the first area 310a.

Consequently, a distance, or length, between the first area 310a and the second area 310b (and therefore, the first pressure sensor 311 and the second pressure sensor 312 may be configured relative to (to correspond to) an extension length of the device between the slid in and slide out states, such that the first and second areas may correspond to the position of the side key 330 in the slide in and slide out states based on an amount of extension (extension length) from the first housing 310 outward from the second housing 320 in the slide out state.

The first pressure sensor 311 is arranged (e.g. disposed, located) at the first area 310a of the first housing 310, so that the first pressure sensor 331 is therefore positioned, or located, so as to correspond to the adjacent position of the side key 330 when the electronic device 300 is in the slide in state. The second pressure sensor 312 is arranged (e.g. disposed, located) at the second area 320a of the first housing 310 so that the second pressure sensor 312 is therefore positioned, or located, so as to correspond to the position of the side key 330 when the electronic device 300 is in the slide out state.

In various embodiments, the electronic device 300 may include a switch circuit board 306 disposed inside the first housing 310. The switch circuit board 306 may be a member that is electrically connected to the first pressure sensor 311 and the second pressure sensor 312 and electrically connected to the circuit board 305. In examples, the switch circuit board may extend along (e.g. adjacent to) an inner side surface (e.g. an inner side surface of a corresponding side surface 2111) of the first housing 310, wherein the first pressure sensor 311 and the second pressure sensor 312 are connected to (e.g. disposed on) the switch circuit board 306.

In various embodiments, the first pressure sensor 311 and the second pressure sensor 312 may be positioned on the inner surface of the first housing 310. For example, the first pressure sensor 311 may be positioned on the inner surface of the first area 310a of the first housing 310, and the second pressure sensor 312 may be positioned on the inner surface of the second area 310b of the first housing 310.

In various embodiments, the first pressure sensor 311 and the second pressure sensor 312 may be configured to detect the pressure applied to the first area 310a and the second area 310b of the first housing 310. For example, when the side key 330 is manipulated (e.g. pressed) in the slide-in state (a state in which the first housing 310 is slid in to the second housing 320), the side key 330 (e.g. in response to the press input by the user) may apply a pressure to the first area 310a of the first housing 310, and the first pressure sensor 311 may detect the pressure applied to the first area 310a. In addition, for example, when the side key 330 is manipulated in the slide-out state (a state in which the first housing 310 is slid out from the second housing 320), the side key 330 may apply a pressure to the second area 310b of the first housing 310, and the second pressure sensor 312 may detect the pressure applied to the second area 310b.

In various embodiments, the first pressure sensor 311 and the second pressure sensor 312 may include a pressure transducer such as a piezoelectric element. In some embodiments, the first pressure sensor 311 and the second pressure sensor 312 may include a strain gauge. The strain gauge may indirectly detect the magnitude of the external pressure by measuring the amount of deformation when the first housing 310 is deformed by the external pressure.

In some embodiments, the first pressure sensor 311 and the second pressure sensor 312 may include a Hall sensor and/or an electrostatic effect sensor. When the first housing 310 is made of a non-metallic material, the pressing of the side key 330 may be detected through a sensor that detects magnetic and/or electrical signals, such as a Hall sensor and/or an electrostatic effect sensor.

In various embodiments, the electronic device 300 may perform a specific operation if the detection value of the pressure sensor is greater than or equal to a preset threshold value. For example, the electronic device 300 may be configured to perform a specific operation assigned to the side key 330 if the detection value of the first pressure sensor 311 is greater than or equal to a first threshold value. For another example, the electronic device 300 may be configured to perform a specific operation assigned to the side key 330 if the detection value of the second pressure sensor 312 is greater than or equal to a second threshold value.

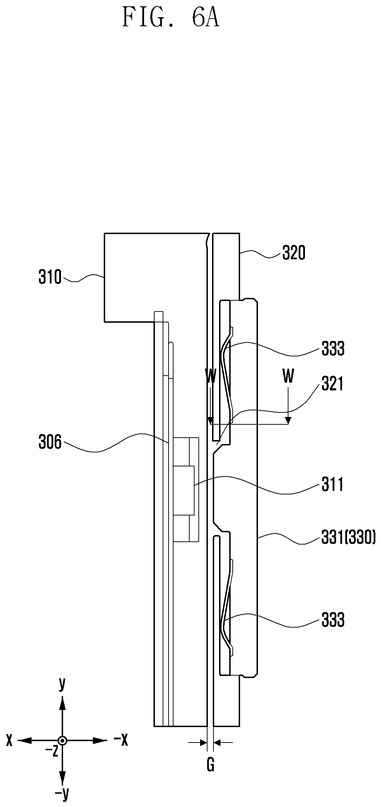

FIG. 6A is an enlarged cross-sectional view of the electronic device 300 according to various embodiments.

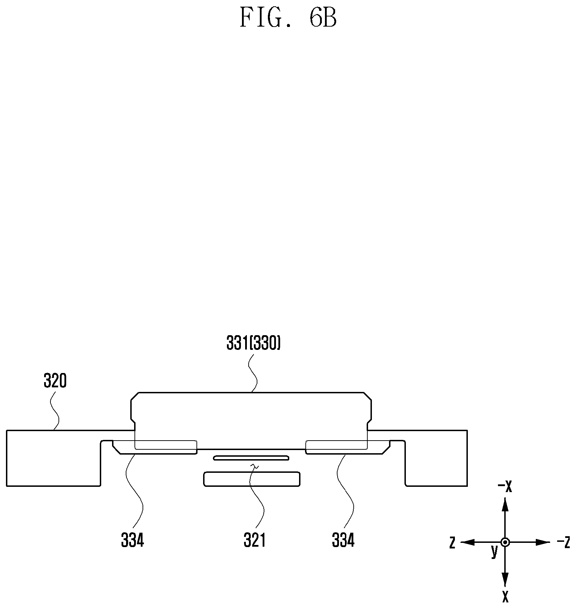

FIG. 6B is an enlarged cross-sectional view of the electronic device 300 according to various embodiments.

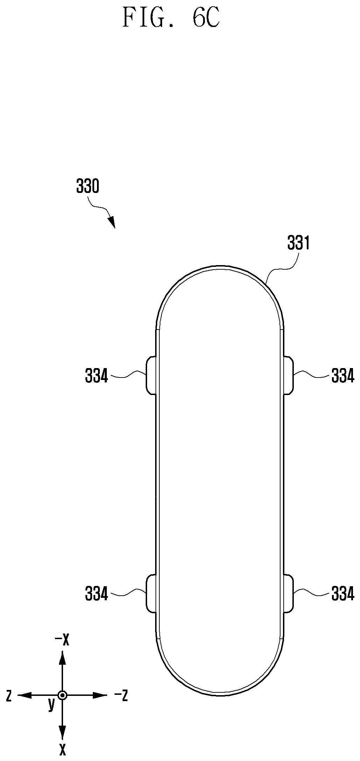

FIG. 6C is a front view of the side key 330 according to various embodiments.

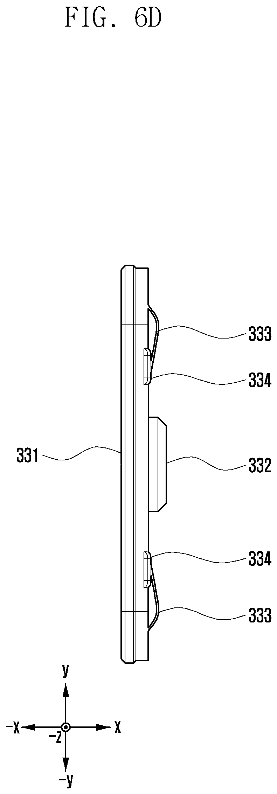

FIG. 6D is a side view of the side key 300 according to various embodiments.

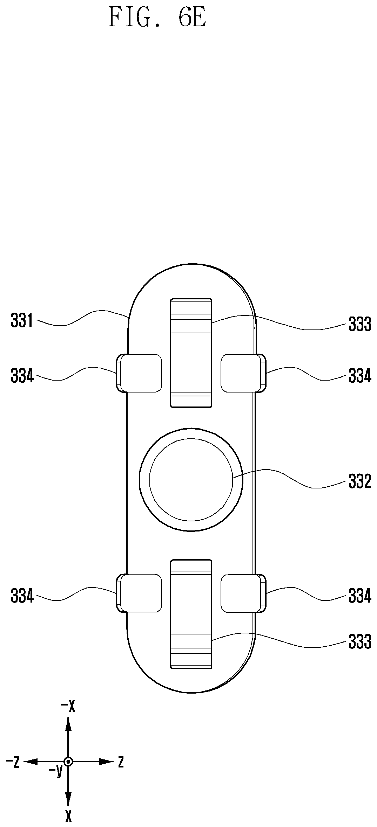

FIG. 6E is a rear view of the side key 330 according to various embodiments.

In respect of Figures 6A-6E, reference may be made to any of the preceding Figures and description thereof.

FIG. 6A is an enlarged view of region W in FIG. 5D.

FIG. 6B is a cross-sectional view along direction U-U in FIG. 6A.

With reference to FIGS. 6A and 6B, a key hole 321 may be formed in the second housing 320 so that the side key 330 is disposed, and the side key 330 may face the first housing 310 through the key hole 321. That is, in examples, the key hole 321 may be formed, or disposed in a side surface of the second housing 320 at a location corresponding to the side key 330. To reduce physical interference between the first housing 310 and the second housing 320 and between the side key 330 and the first housing 310, a gap G may be formed between the first housing 310 and the second housing 320.

In various embodiments, a sensor groove may be formed on the inner surface of the first area 310a of the first housing 310, and the first pressure sensor 311 may be positioned in the sensor groove. It will be apparent to those skilled in the art that the above-described configuration is also applicable to the second pressure sensor 312 and the second area 310b.

With reference to FIGS. 6C to 6E, the side key 330 may include a body part 331, a pressing part 332, an elastic member 333, and a limiting member 334. The body part 331 may be a portion that is exposed to the surface of the second housing 320 and thus is touched by the user when the user manipulates the side key 330. The pressing part 332 may be a portion that protrudes from the body part 331 to press the surface of the housing in the first area 310a or the second area 310b. The elastic member 333 may be a member configured to return the side key 330 when the side key 330 is released from being pressed. In various embodiments, the elastic member 333 may include an elastic structure, such as a spring, a plate spring, and/or a clip. In some embodiments, the elastic member 333 may include an elastic structure configured to provide tactile feedback by clicking, such as a metal dome or a rubber dome. In some embodiments, the limiting member 334 may be a portion of the side key 330 that laterally protrudes to be caught inside the second housing 320 to limit the return movement of the side key 330 due to the elastic member 333.

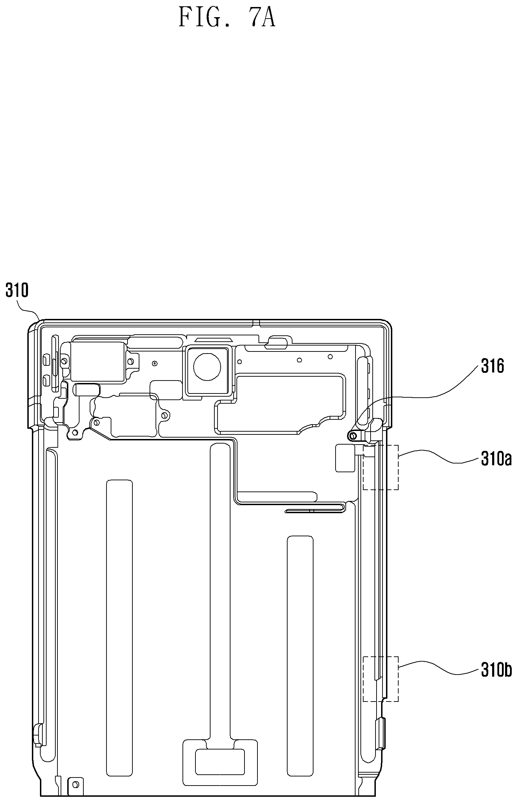

FIG. 7A is a perspective view of the first housing 310 of the electronic device 300 according to various embodiments of the disclosure.

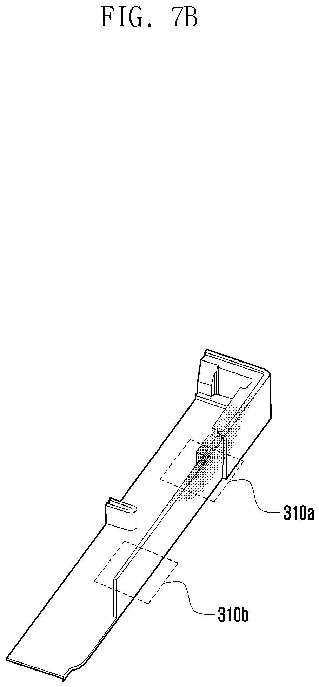

FIG. 7B is a view illustrating the distribution of the amount of deformation of the first area 310a in the first housing 310 according to various embodiments.

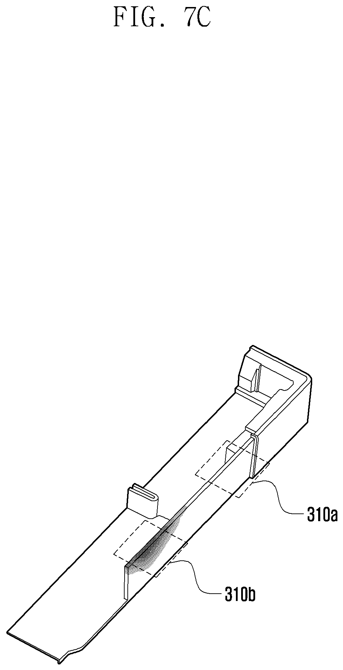

FIG. 7C is a view illustrating the distribution of the amount of deformation of the second area 310b in the first housing 310 according to various embodiments.

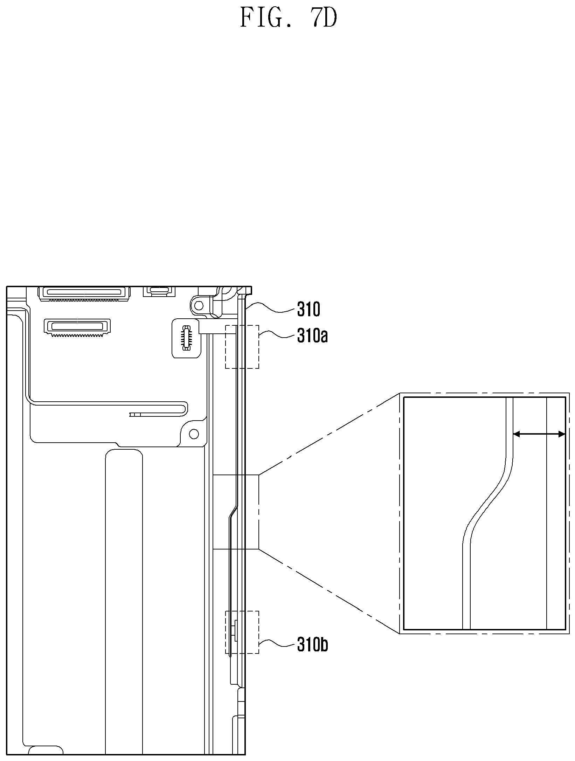

FIG. 7D is a front view of the first housing 310 according to various embodiments.

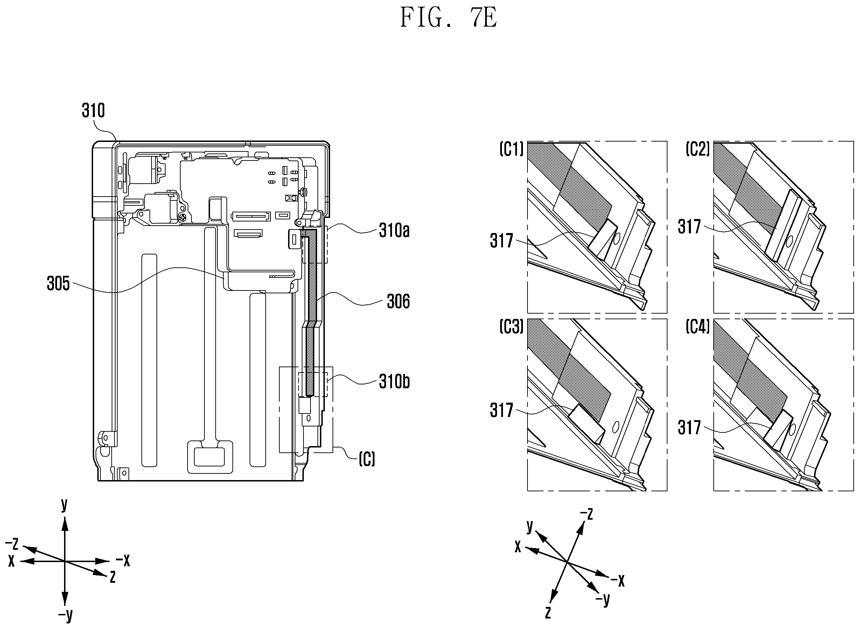

FIG. 7E is perspective and enlarged views of the first housing 310 according to various embodiments.

The enlarged views in FIG. 7E are an enlarged view of region C.

In respect of Figures 7A-7E, reference may be made to any of the preceding Figures and description thereof.

With reference to FIG. 7A, the first housing 310 may have different rigidities in the first area 310a and the second area 310b. For example, the first area 310a of the first housing 310 may have higher rigidity than the second area 310b due to the members (e.g., support structure 316 for the circuit board 305) being disposed around it for mounting other components of the electronic device 300. For example, a side surface (e.g. side surface 2111) corresponding to a first area 310a, that may correspond to an area pressed by a side key 330, may have a higher rigidity than a side surface corresponding to a second area 310b.

With reference to FIGS. 7B and 7C, due to the structural characteristics described above, the first area 310a of the first housing 310 may have a smaller deformation amount than the second area 310b when pressed by the side key 330. With reference to FIG. 7B, the deformation due to the pressure applied to the first area 310a is distributed over a relatively wider range of the first housing 310, so that the deformation amount of the first area 310a may be relatively smaller. Also, with reference to FIG. 7C, the deformation due to the pressure applied to the second area 310b is distributed in a relatively narrower range of the first housing 310, so that the deformation amount of the second area 310b may be relatively larger than that of the first area 310a.

That is, within the first housing 310, there may be one or more components (e.g. a circuit board 305 and support structure 316 thereof ) which are disposed in an inner space formed by the first housing 310. The one or more components - such as the circuit board 305 - may be disposed around at least a portion of the first area 310a of the first housing 310. That is, in examples, a portion (e.g. a side surface thereof) of the circuit board 305 (or support member 316) may be arranged adjacent to the first area 310a.

Therefore, when the electronic device is in the slide in state (and the first housing 310 is disposed within the second housing 330), and the side key 330 is pressed to press to a corresponding area of the first housing 310a (e.g. a side wall within the first area 310a), the surrounding structural components provide an additional rigidity to the first area 310a, such that the deformation amount (e.g. an amount in an x direction arising from the side key 330 toward an inner space of the first housing) is small.

Conversely, as the second area 310b does not have the same structural arrangement, the second area 310b may be less rigid, and so may experience a greater amount of deformation (e.g. in the x direction) in response to a user input of a same pressure. The same press input by the user may therefore be differently detected by the respective pressure sensors (e.g. first pressure sensor 311 and second pressure sensor 312).

Due to the difference in deformation amount between the first area 310a and the second area 310b for the same pressure, when the user manipulates the side key 330 , the pressure transferred to the first pressure sensor 311 may be lower than the pressure transferred to the second pressure sensor 312. Hence, when the user manipulates (presses) the side key 330, the detection value of the first pressure sensor 311 may be smaller than the detection value of the second pressure sensor 312. So, the first threshold value for evaluating the detection value of the first pressure sensor 311 may be smaller than the second threshold value for evaluating the detection value of the second pressure sensor 312.

With reference to FIGS. 7D and 7E, in various embodiments, the first area 310a and the second area 310b of the first housing 310 may be formed to be deformed by substantially the same amount when pressed by the side key 330. In some embodiments, the substantially the same deformation amount described above may include a difference in deformation amount that is so small that it is not possible to tactilely perceive the difference in the depth of pressing between when the side key 330 is pressed in the slide-in state (state in which the first housing 310 is slid in to the second housing 320) and when the side key 330 is pressed in the slide-out state (state in which the first housing 310 is slid out from the second housing 320). In some embodiments, the substantially the same deformation amount described above may include a difference between the detection values of the first pressure sensor 311 and the second pressure sensor 312 being within the error limits of the first pressure sensor 311 and the second pressure sensor 312. Further, in some embodiments, the substantially the same deformation amount described above may mean that the operation of the electronic device assigned to the side key 330 can be performed identically upon pressing the side key 330 when the first housing 310 is slid in or slid out from the second housing 320, even if the first threshold value and the second threshold value are set identically for the first pressure sensor 311 and the second pressure sensor 312.

In examples, the second area 310b of the first housing 310 may comprise a structural reinforcement relative to the first area 310a. As such, when the side key 330 receives a press input, an amount of deformation of the first area 310a when the side key 330 is pressed in the slide-in state and an amount of deformation of the second area 310b when the side key 330 is pressed in the slide-out state may be substantially the same.

With reference to FIG. 7D, in various embodiments, the thickness T2 of the second area 310b of the first housing 310 may be greater than the thickness T2 of the first area 310a. That is, the structural reinforcement may comprise configuring, or forming, a larger thickness of the second area 310b of the first housing 310 (e.g. increasing a wall thickness of the first housing 310 in the second area 310b). Since the second area 310b is thicker than the first area 310a, the difference in rigidity between the first area 310a and the second area 310b may be reduced. The difference in thickness between the first area 310a and the second area 310b may be set so that the difference in rigidity between the first area 310a and the second area 310b is less than a preset value. For example, the difference in thickness between the first area 310a and the second area 310b may be set so that the magnitudes of detection values of the first pressure sensor 311 and the second pressure sensor 312 when the first area 310a and the second area 310b are pressed by the side key 330 belong to the detection ranges (dynamic ranges) of the first pressure sensor 311 and the second pressure sensor 312.

With reference to FIG. 7E, the first housing 310 according to various embodiments may include a rigidity reinforcing member 317. That is, in examples, a structural reinforcement may comprise a rigidity reinforcing member 317. The rigidity reinforcing member 317 may be a member that is located within the region including the first area 310a and its periphery and/or within the region including the second area 310b and its periphery in the first housing 310, and reinforces the rigidity to reduce the difference in rigidity between the first area 310a and the second area 310b. That is, the rigidity reinforcing member is disposed, or positioned, in an area (e.g. of the first area 310a and the second area 310b) having lower structural rigidity. For example, if the rigidity of the second area 310b is lower than that of the first area 310a of the first housing 310, the rigidity reinforcing member 317 may be placed on the inner surface of the first housing 310 in correspondence to the second area 310b and/or its periphery. The rigidity reinforcing member 317 may include a stiffener, buttress, and/or beam having a triangular cross-section as shown by (C1), (C3) and (C4) of FIG. 7E, for example. In some embodiments, the rigidity reinforcing member 317 may have a rectangular cross-section as shown by (C2) of FIG. 7E, for example. The shape of the rigidity reinforcing member 317 in the drawing is exemplary, and the idea of the disclosure is not limited to those specific shapes in the drawing.

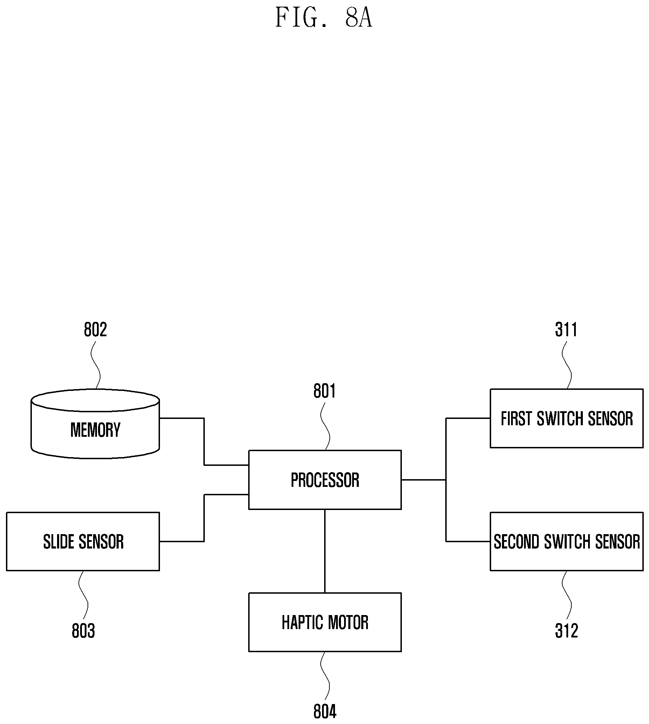

FIG. 8A is a block diagram of the electronic device 300 according to various embodiments.

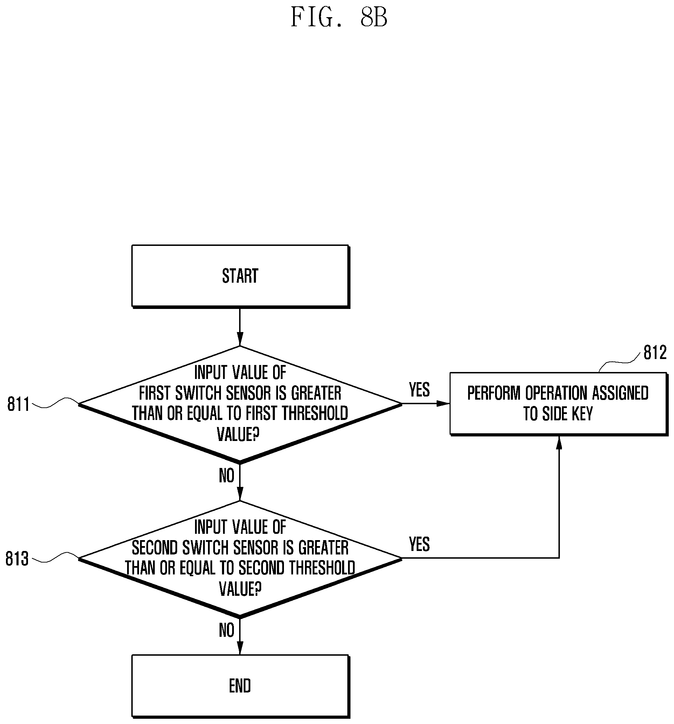

FIG. 8B is a flowchart illustrating operations of the electronic device 300 according to various embodiments.

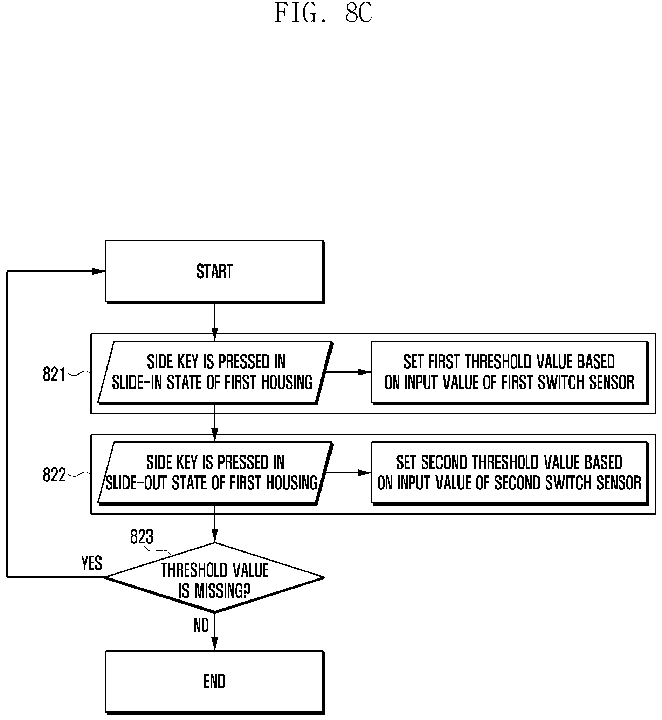

FIG. 8C is a flowchart illustrating operations of the electronic device 300 according to various embodiments.

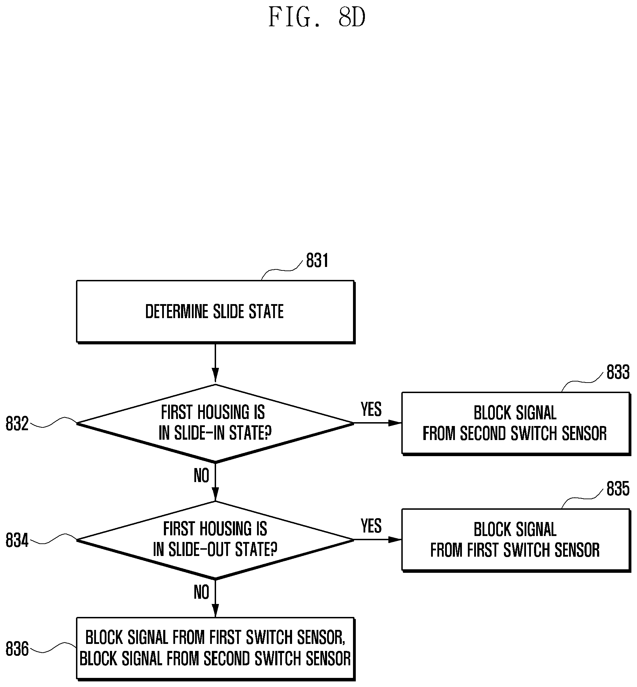

FIG. 8D is a flowchart illustrating operations of the electronic device 300 according to various embodiments.

The described steps of Figure 8 may be performed in addition to any of the examples relevant to Figures 1-7, as above.

With reference to FIG. 8A, the electronic device 300 may include a processor 801 (e.g., processor 110 in FIG. 1). The processor 801 may be operably connected to a memory 802 (e.g., non-volatile memory 122 in FIG. 1), a first pressure sensor 311, and a second pressure sensor 312.

In various embodiments, the processor 801 may perform a specific operation (e.g., system shutdown, display on/off, camera shooting, volume adjustment, and/or execution of a configured application) assigned to the side key 330 based on the detection values of the first pressure sensor 311 and the second pressure sensor 312. The memory 802 may store instructions that cause the processor 801 to perform the above-mentioned operations.

With reference to FIG. 8B, the processor 801 may determine whether the detection value of the first pressure sensor 311 is greater than or equal to the first threshold value (811), and if being greater than or equal to the first threshold value, it may perform a specific operation assigned to the side key 330 (812). In addition, the processor 801 may determine whether the detection value of the second pressure sensor 312 is greater than or equal to the second threshold value (813), and if being greater than or equal to the second threshold value, it may perform a specific operation assigned to the side key 330 (812). The memory 802 may store instructions that cause the processor 801 to perform the above-mentioned operations. In addition, the memory 802 may store the first threshold value and the second threshold value.

With reference back to FIG. 8A, the electronic device 300 may include a slide sensor 803 operably connected to the processor 801. The slide sensor 803 may be a sensor that detects the slide-in state or the slide-out state of the first housing 310 relative to the second housing 320. The slide sensor 803 may include, for example, an encoder.

Referring to FIG. 8C, the processor 801 may perform a calibration operation 820. The calibration operation 820 may be an operation for setting the first threshold value and/or the second threshold value for the first pressure sensor 311 and the second pressure sensor 312. In various embodiments, the calibration operation 820 may include an operation of setting a first threshold value based on a detection value of the first pressure sensor 311 when the side key 330 is pressed in the slide-in state (state in which the first housing 310 is slid in to the second housing 320) (821), and an operation of setting a first threshold value based on a detection value of the first pressure sensor (311) when the side key 330 is pressed in the slide-in state (822). For example, the first threshold value and the second threshold value may be set to a value that is lower by a specific ratio compared to the detection values of the first pressure sensor 311 and the second pressure sensor 312. In some embodiments, the calibration operation 820 may include an operation of checking whether the first threshold value and/or the second threshold value is missing and resetting the first threshold value and/or the second threshold value if missing (823).

The calibration operation 820 performed by the processor 801 may reduce the difference in responsiveness between the first pressure sensor 311 and the second pressure sensor 312, which may occur due to the difference in rigidity between the first area 310a and the second area 310b of the first housing 310 as in the embodiment of FIG. 7A, for example. In various embodiments, the calibration operation may be performed during the manufacturing of the electronic device 300. In some embodiments, the user may recalibrate the first threshold value and the second threshold value according to a change in the user's usage environment.

In some examples, the calibration operation may be performed in addition to providing a structural reinforcement (e.g. as set out in Figures 7D-7E).

With reference to FIG. 8D, the processor 801 may determine the slide state (e.g., slide-in state or slide-out state) of the electronic device 300 based on the detection value of the slide sensor 803 (831). The processor 801 may determine whether the electronic device 300 is in the slide-in state (832), that is, whether the first housing 310 is slid in relative to the second housing 320, and may block the signal of the second pressure sensor 312 (833) if being in the slide-in state. The processor 801 may determine whether the electronic device 300 is in the slide-out state (834), that is, whether the first housing 310 is slid out from the second housing 320, and may block the signal of the first pressure sensor 311 (835) if being in the slide-out state.

In the slide-in state, since the pressure sensor at the position corresponding to the side key 330 is the first pressure sensor 311, the processor 801 may perform a specific operation assigned to the side key 330 based on the detection value of the first pressure sensor 311. Additionally, in the slide-in state, since the second pressure sensor 312 is not at a position corresponding to the side key 330, the input signal generated from the second pressure sensor 312 may be caused by a sensor error, noise, or unintended impact or pressure applied to the first housing 310. Hence, in the slide-in state, malfunction of the electronic device 300 can be prevented by blocking or ignoring the signal of the second switch.

Further, in the slide-out state, since the pressure sensor at the position corresponding to the side key 330 is the second pressure sensor 312, the processor 801 may perform a specific operation assigned to the side key 330 based on the detection value of the second pressure sensor 312. Additionally, in the slide-in state, since the first pressure sensor 311 is not at a position corresponding to the side key 330, the processor 801 may prevent malfunction of the electronic device 300 by blocking or ignoring the signal of the first switch.

In some embodiments, upon determining that the slide state of the electronic device 300 is a state not corresponding to the slide-in state or the slide-out state (e.g., intermediate state in which the first housing 310 is partially slid out from the second housing 320), the processor 801 may block the signals of the first pressure sensor 311 and the second pressure sensor 312 (836) to prevent malfunction of the electronic device 300.

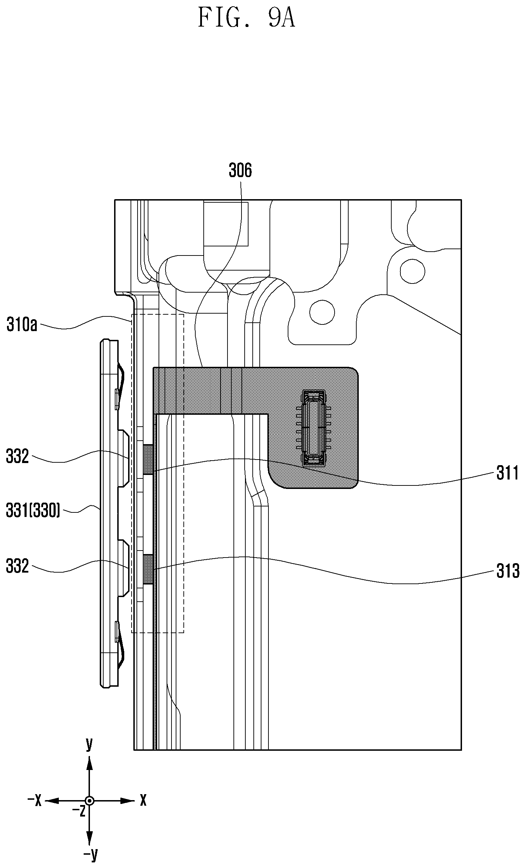

FIG. 9A is an internal top view of the electronic device 300 according to various embodiments.

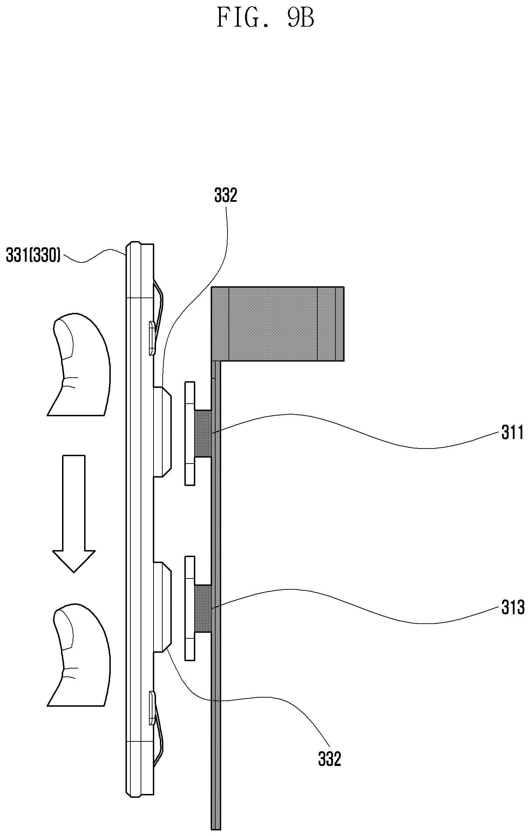

FIG. 9B is a schematic diagram illustrating sliding input operation of the electronic device 300 according to various embodiments.

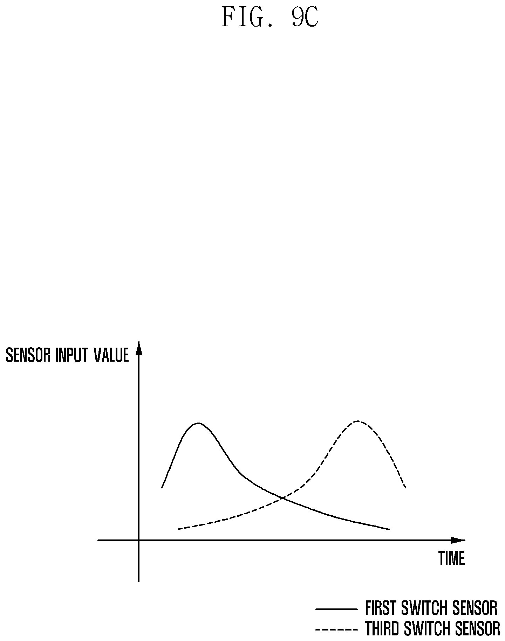

FIG. 9C is a graph illustrating the operation of pressure sensors during sliding input operation in various embodiments.

With reference to FIG. 9A, in various embodiments, the first housing 310 may include a plurality of pressure sensors disposed adjacent to each other. For example, the electronic device 300 may include a third pressure sensor disposed adjacent to the first pressure sensor 311 in the first area 310a. When pressed, the side key 330 may be configured to pressurize the positions where the first pressure sensor 311 and the third pressure sensor are arranged. In this embodiment, the side key 330 may be used as a volume rocker. For example, the processor 801 may increase the sound volume if the detection value of the first pressure sensor 311 is greater than the detection value of the third pressure sensor, and may decrease the sound volume if the detection value of the third pressure sensor is greater than the detection value of the first pressure sensor 311. It will be apparent to those skilled in the art that the second pressure sensor 312 and a fourth pressure sensor may be arranged adjacent to each other in the second area 310b to perform the same function as the configuration described above.

With reference to FIGS. 9B and 9C, the electronic device 300 may be configured to receive a sliding input from the user. For example, when the user enters a sliding input by swiping down the side key 330 in a specific direction (e.g., from the first pressure sensor 311 to the third pressure sensor), the detection value of the first pressure sensor 311 may increase with time before the third pressure sensor, and the detection value of the third pressure sensor may increase after the detection value of the first pressure sensor 311 decreases. In such a case, the processor 801 may be configured to determine that the user has entered an input of swiping down the side key 330 and perform an operation assigned to the corresponding input (e.g., adjusting the volume). An electronic device 300 according to various embodiments of the disclosure may include a first housing 310, and a second housing 320 configured to move relative to the first housing 310 between a slide-in state and a slide-out state of the electronic device. For example, in the slide-in state, the first housing 310 may be at least partially accommodated within the second housing. In the slide out state, at least a portion of the first housing 310 may extend (slide out) from the second housing 220 (e.g. outward from the second housing 320). The electronic device 300 may include a side key 330 that is disposed on the side wall (e.g. a side surface) of the second housing 320 and configured to press the side wall (e.g. side surface) of the first housing 310 when pressed (e.g. a press input from the user). For example, the side key 330 may be configured to press the side wall (or side surface) of the first housing, such that an area of the first housing 310 corresponding to the position of the side key experiences a force (or deformation) arising from the press input. The electronic device 300 may include a first pressure sensor 311 disposed in a first area 310a of the first housing 310. The electronic device 300 may include a second pressure sensor 312 disposed in a second area 310b of the first housing 310. The position of the side key 330 may correspond to the first area 310a of the first housing 310 in the slide-in state, and may correspond to the second area 310b of the first housing 310 in the slide-out state. For example, the first area 310a of the first housing 310 is an area of the first housing 310 (e.g. the area corresponding to the side wall) that is pressed by the side key 330 when the electronic device 300 is in the slide in state, and the second area 310b of the first housing 310 is an (a different) area of the first housing that is pressed by the side key 330 when the electronic device is in the slide out state. The first housing 310 may be configured so that the deformation amount of the first area 310a when the side key 330 is pressed in the slide-in state is substantially the same as the deformation amount of the second area 310b when the side key 330 is pressed in the slide-out state.

For example, the second area 310b of the first housing 310 may comprise a structural reinforcement relative to the first area 310a, such that when the side key 330 receives a press input, an amount of deformation of the first area 310a when the side key 330 is pressed in the slide-in state and an amount of deformation of the second area 310b when the side key 330 is pressed in the slide-out state is substantially the same.

In various embodiments, the first pressure sensor 311 may be disposed on the inner surface of the first housing 310 in the first area 310a. The second pressure sensor 312 may be disposed on the inner surface of the first housing 310 in the second area 310b.

In various embodiments, the first pressure sensor 311 may be configured to detect a pressure applied to the first area 310a of the first housing 310 by the side key 330. The second pressure sensor 312 may be configured to detect a pressure applied to the second area 310b of the first housing 310 by the side key 330.

In various embodiments, the housing may be configured such that the difference between a first pressure value detected by the first pressure sensor 311 when the side key 330 presses the first area 310a with a specified pressure and a second pressure value detected by the second pressure sensor 312 when the side key 330 presses the second area 310b with the specified pressure is less than or equal to a preset value.

In various embodiments, the thickness of the second area 310b of the first housing 310 may be greater than the thickness of the first area 310a.

In various embodiments, the housing may include a rigidity reinforcing member 317 positioned within a region including the first area 310a and its periphery or within a region including the second area 310b and its periphery.

In various embodiments, the electronic device 300 may further include a processor 801 operably connected to the first pressure sensor 311 and the second pressure sensor 312. The processor 801 may be configured to perform a first operation when the detection value of the first pressure sensor 311 is greater than or equal to a first threshold value, and perform the first operation when the detection value of the second pressure sensor 312 is greater than or equal to a second threshold value.

In various embodiments, the electronic device 300 may further include a slide sensor 803 that is configured to detect the slide-in state and the slide-out state of the first housing 310 relative to the second housing 320 and is operably connected to the processor 801. The processor 801 may be configured to block the signal of the second pressure sensor 312 when the slide sensor 803 detects the slide-in state, and block the signal of the first pressure sensor 311 when the slide sensor 803 detects the slide-out state.

In various embodiments, the processor 801 may be configured to perform a calibration operation. The calibration operation may include an operation of setting the first threshold value to the detection value of the first pressure sensor 311 when the side key 330 is pressed in the slide-in state, and an operation of setting the second threshold value to the detection value of the second pressure sensor 312 when the side key 330 is pressed in the slide-out state.

In various embodiments, the electronic device 300 may further include a haptic motor 804. The processor 801 may be configured to start the haptic motor 804 when the detection value of the first pressure sensor 311 is greater than or equal to the first threshold value, or when the detection value of the first pressure sensor 311 is greater than or equal to the first threshold value.

An electronic device 300 according to various embodiments of the disclosure may include a first housing 310, and a second housing 320 configured to move with respect to the first housing 310 between a slide-in state and a slide-out state (for example, the electronic device 300 may be configured to change between a slide-in and a slide out state). For example, in the slide-in state, the first housing 310 may be at least partially accommodated within the second housing. In the slide out state, at least a portion of the first housing 310 may extend (slide out) from the second housing 220) in a first direction (e.g.. outward from the second housing 320). The electronic device 300 may include a side key 330 that is disposed on the side wall of the second housing 320 and configured to press the side wall of the first housing 310 when pressed . The electronic device 300 may include a first pressure sensor 311 disposed in a first area 310a of the first housing 310, and a second pressure sensor 312 disposed in a second area 310b of the first housing 310. The electronic device 300 may include a non-transitory memory 802 to store computer-executable instructions, and a processor 801 operably connected to the first pressure sensor 311, the second pressure sensor 312, and the non-transitory memory 802. The computer-executable instructions may, when executed by the processor 801, cause the electronic device 300 to perform a first operation upon determining that a detection value of the first pressure sensor 311 is greater than or equal to a first threshold value, and to perform the first operation upon determining that a detection value of the second pressure sensor 312 is greater than or equal to a second threshold value. The position of the side key 330 may correspond to the first area 310a of the first housing 310 in the slide-in state, and may correspond to the second area 310b of the first housing 310 in the slide-out state. The first threshold value may be smaller than the second threshold value.

In various embodiments, the first pressure sensor 311 may be disposed on the inner surface of the first housing 310 in the first area 310a, and the second pressure sensor 312 may be disposed on the inner surface of the first housing 310 in the second area 310b.

In various embodiments, the first pressure sensor 311 may be configured to detect a pressure applied to the first area 310a of the first housing 310 by the side key 330, and the second pressure sensor 312 may be configured to detect a pressure applied to the second area 310b of the first housing 310 by the side key 330.

In various embodiments, the housing may be configured such that the difference between a first pressure value detected by the first pressure sensor 311 when the side key 330 presses the first area 310a with a specified pressure and a second pressure value detected by the second pressure sensor 312 when the side key 330 presses the second area 310b with the specified pressure is less than or equal to a preset value.

In various embodiments, the first housing 310 may be configured such that the difference in rigidity between the first area 310a and the second area 310b is less than a preset value.

In various embodiments, the thickness of the second area 310b of the first housing 310 may be greater than the thickness of the first area 310a.

In various embodiments, the housing may include a rigidity reinforcing member 317 positioned within a region including the first area 310a and its periphery or within a region including the second area 310b and its periphery.

In various embodiments, the electronic device 300 may further include a slide sensor 803 that is configured to detect the slide-in state and the slide-out state of the first housing 310 relative to the second housing 320 and is operably connected to the processor 801. The processor 801 may be configured to block the signal of the second pressure sensor 312 when the slide sensor 803 detects the slide-in state, and block the signal of the first pressure sensor 311 when the slide sensor 803 detects the slide-out state.

In various embodiments, the processor 801 may be configured to perform a calibration operation. The calibration operation may include an operation of setting the first threshold value to the detection value of the first pressure sensor 311 when the side key 330 is pressed in the slide-in state, and an operation of setting the second threshold value to the detection value of the second pressure sensor 312 when the side key 330 is pressed in the slide-out state.

In various embodiments, the electronic device 300 may further include a haptic motor 804. The processor 801 may be configured to start the haptic motor 804 when the detection value of the first pressure sensor 311 is greater than or equal to the first threshold value, or when the detection value of the first pressure sensor 311 is greater than or equal to the first threshold value.

In one embodiment, an electronic device 300 comprises a first housing; a second housing configured to move with respect to the first housing to change the electronic device between a slide-in state and a slide-out state, wherein, in the slide-in state, the first housing is at least partly accommodated within the second housing; a side key disposed on a side wall of the second housing and configured to press an area of (e.g. a side wall of) the first housing in response to a press input; a first pressure sensor disposed in a first area of the first housing; and a second pressure sensor disposed in a second area of the first housing, wherein the first area of the first housing is the area of the first housing (e.g. an area surrounding the side wall) that is pressed by the side key when the electronic device is in the slide-in state; and wherein the second area of the first housing 310 is an area of the first housing 310 (e.g. an area corresponding to/surrounding the side wall that is pressed by the side key); that is pressed by the side key 330 when the electronic device 300 is in the slide-out state.

In one embodiment, further to the first example, the first pressure sensor 311 is disposed on an inner surface of the first housing 310 in the first area 310a, and the second pressure sensor 312 is disposed on the inner surface of the first housing 310 in the second area 310b.

In one embodiment, further to the first or second example, the first pressure sensor 311 is configured to detect pressure applied to the first area 310a of the first housing 310 by the side key 330, and the second pressure sensor 312 is configured to detect pressure applied to the second area 310b of the first housing 310 by the side key 330.

In one embodiment, further to the electronic device of the second or third example, the first area 310a of the first housing 310 where the first pressure sensor 311 is disposed is positioned closer to a top side surface 2112 of the first housing 310 than the second area 310b where the second pressure sensor 312 is disposed.

In one embodiment, further to the electronic device of any preceding example, the second area 310b of the first housing 310 comprises a structural reinforcement relative to the first area 310a, such that an amount of deformation of the first area 310a when the side key 330 is pressed in the slide-in state and an amount of deformation of the second area 310b when the side key 330 is pressed in the slide-out state is substantially the same.

In one embodiment, further to the electronic device of the fifth example, the structural reinforcement comprises that the first housing 310 has a greater thickness in the second area 310b than in the first area 310a.

In one embodiment, further to the electronic device of the fifth example, the structural reinforcement comprises that the first housing 310 comprises a rigidity reinforcing member 317 positioned at the second area 310a.

In one embodiment, further to the electronic device of the fifth to seventh examples, based on the structural reinforcement, a difference between a first pressure value detected by the first pressure sensor 311 when the side key 330 presses the first area 310a with a predetermined pressure and a second pressure value detected by the second pressure sensor 312 when the side key 330 presses the second area 310b with the predetermined pressure is less than or equal to a predetermined value.

In one embodiment, further to the electronic device of any preceding example, the electronic device further comprises a processor 801 operably connected to the first pressure sensor 311 and the second pressure sensor 312, and wherein the processor 801 is configured to perform a first operation in case that a detection value of the first pressure sensor 311 is equal to or greater than a first threshold value, and to perform the first operation in case that a detection value of the second pressure sensor 312 is equal to or greater than a second threshold value.

In one embodiment, further to the electronic device of the ninth example, the electronic device further comprises a slide sensor 803 that is configured to detect the slide-in and slide-out states of the first housing 310 relative to the second housing 320 and operably connected to the processor 801, and wherein the processor 801 is configured to block a signal from the second pressure sensor 312 in case that the slide sensor 803 detects the slide-in state, and to block a signal from the first pressure sensor 311 in case that the slide sensor 803 detects the slide-out state.

In one embodiment, further to the electronic device of the ninth or tenth example, the processor 801 is configured to perform a calibration operation; and the calibration operation comprises setting the first threshold value to a detection value of the first pressure sensor 311 when the side key 330 is pressed in the slide-in state, and setting the second threshold value to a detection value of the second pressure sensor 312 when the side key 330 is pressed in the slide-out state.

In one embodiment, further to the electronic device of the eleventh example, the first threshold value is set lower than the second threshold value.

In one embodiment, further to the electronic device of the ninth to twelfth examples, the electronic device further comprises a haptic motor 804, and wherein the processor 801 is configured to operate the haptic motor 804 in case that a detection value of the first pressure sensor 311 is equal to or greater than the first threshold value, or in case that a detection value of the second pressure sensor 312 is equal to or greater than the second threshold value.

In one embodiment, further to the electronic device of any preceding example, the first housing 310 comprises a circuit board 305 disposed in an inner space formed by the first housing 310, and wherein the circuit board 305 is disposed around (e.g. adjacent to) at least a portion of the first area 310a of the first housing 310.

In one embodiment, the device further comprises a switch circuit board 306, electrically connected to the circuit board 305, wherein the switch circuit board 306 is arranged along an inner side surface of the first housing 310 and wherein the first pressure sensor 311 and the second pressure sensor 312 are connected to the switch circuit board 306. In addition, the embodiments of the disclosure disclosed in this specification and drawings are merely specific examples presented to easily explain the technical contents according to the embodiments of the disclosure and to help understand the embodiments of the disclosure, and are not intended to limit the scope of the embodiments of the disclosure. Therefore, the scope of the various embodiments of the disclosure should be interpreted as including all changes or modifications derived based on the technical ideas of the various embodiments of the disclosure in addition to the embodiments disclosed herein.

## Claims

1. An electronic device (300) comprising:
a first housing (310);
a second housing (320) configured to move with respect to the first housing (310) to change the electronic device between a slide-in state and a slide-out state,
wherein, in the slide-in state, the first housing (310) is at least partly accommodated within the second housing (320);
a side key (330) disposed on a side wall of the second housing (320) and configured to press an area of the first housing (310) in response to a press input;
a first pressure sensor (311) disposed in a first area (310a) of the first housing (310); and
a second pressure sensor (312) disposed in a second area (310b) of the first housing (310),
wherein the first area (310a) of the first housing (310) is the area of the first housing (310) that is pressed by the side key (330) when the electronic device (300) is in the slide-in state;
and wherein the second area (310b) of the first housing (310) is the area of the first housing (310) that is pressed by the side key (330) when the electronic device (300) is in the slide-out state.

2. The electronic device of claim 1, wherein the first pressure sensor (311) is disposed on an inner surface of the first housing (310) in the first area (310a), and the second pressure sensor (312) is disposed on the inner surface of the first housing (310) in the second area (310b).

3. The electronic device of claim 1, wherein the first pressure sensor (311) is configured to detect pressure applied to the first area (310a) of the first housing (310) by the side key (330), and the second pressure sensor (312) is configured to detect pressure applied to the second area (310b) of the first housing (310) by the side key (330).

4. The electronic device of claims 2 or 3, wherein the first area (310a) of the first housing (310) where the first pressure sensor (311) is disposed is positioned closer to a top side surface (2112) of the first housing (310) than the second area (310b) where the second pressure sensor (312) is disposed.

5. The electronic device of any claim 1, the second area (310b) of the first housing (310) comprising a structural reinforcement relative to the first area (310a), such that an amount of deformation of the first area (310a) when the side key (330) is pressed in the slide-in state and an amount of deformation of the second area (310b) when the side key (330) is pressed in the slide-out state is substantially the same.

6. The electronic device of claim 5, wherein the structural reinforcement comprises that the first housing (310) has a greater thickness in the second area (310b) than in the first area (310a).

7. The electronic device of claim 5, wherein the structural reinforcement comprises that the first housing (310) comprises a rigidity reinforcing member (317) positioned at the second area (310a).

8. The electronic device of claims 5 to 7, wherein, based on the structural reinforcement, a difference between a first pressure value detected by the first pressure sensor (311) when the side key (330) presses the first area (310a) with a predetermined pressure and a second pressure value detected by the second pressure sensor (312) when the side key (330) presses the second area (310b) with the predetermined pressure is less than or equal to a predetermined value.

9. The electronic device of claim 1, further comprising a processor (801) operably connected to the first pressure sensor (311) and the second pressure sensor (312), and wherein the processor (801) is configured to perform a first operation in case that a detection value of the first pressure sensor (311) is equal to or greater than a first threshold value, and to perform the first operation in case that a detection value of the second pressure sensor (312) is equal to or greater than a second threshold value.

10. The electronic device of claim 9, further comprising a slide sensor (803) that is configured to detect the slide-in and slide-out states of the first housing (310) relative to the second housing (320) and operably connected to the processor (801), and wherein the processor (801) is configured to block a signal from the second pressure sensor (312) in case that the slide sensor (803) detects the slide-in state, and to block a signal from the first pressure sensor (311) in case that the slide sensor (803) detects the slide-out state.

11. The electronic device of claim 9 or 10, wherein:
the processor (801) is configured to perform a calibration operation; and
the calibration operation comprises setting the first threshold value to a detection value of the first pressure sensor 311 when the side key 330 is pressed in the slide-in state, and setting the second threshold value to a detection value of the second pressure sensor 312 when the side key 330 is pressed in the slide-out state.

12. The electronic device of claim 11, wherein the first threshold value is set lower than the second threshold value.

13. The electronic device of claims 9 to 12, further comprising a haptic motor (804), and wherein the processor (801) is configured to operate the haptic motor (804) in case that a detection value of the first pressure sensor (311) is equal to or greater than the first threshold value, or in case that a detection value of the second pressure sensor (312) is equal to or greater than the second threshold value.

14. The electronic device of claim 1, wherein the first housing (310) comprises a circuit board (305) disposed in an inner space formed by the first housing (310), and
wherein the circuit board is disposed around at least a portion of the first area (310a) of the first housing (310).

15. The electronic device of claim 14, further comprising a switch circuit board (306), electrically connected to the circuit board (305), wherein the switch circuit board (306) is arranged along an inner side surface of the first housing (310), and wherein the first pressure sensor (311) and the second pressure sensor (312) are connected to the switch circuit board (306).
